# EUROPÄISCHE PATENTSCHRIFT

(11) **EP 3 689 730 B1**
(45) Veröffentlichungstag und Bekanntmachung des Hinweises auf die Patenterteilung: **26.07.2023**
(21) Anmeldenummer: 20159575.8
(22) Anmeldetag: 05.04.2017
(51) Int. Cl.: B62M 6/55, B62M 11/14, B62M 11/18

(54) **ANTRIEBSANORDNUNG UND FAHRZEUG**
DRIVE ASSEMBLY AND VEHICLE
SYSTÉME D'ENTRAÎNEMENT ET VÉHICULE

(30) Priorität: 26.04.2016 DE 102016207035
(43) Veröffentlichungstag der Anmeldung: 05.08.2020
(62) Teilanmeldung aus: 17164953.6
(73) Patentinhaber: Robert Bosch GmbH, 70442 Stuttgart (DE)
(72) Erfinder: Kimmich, Peter, 71144 Steinenbronn (DE); Hinterkausen, Markus, 71696 Moeglingen (DE)

(56) Entgegenhaltungen:
- EP-A1- 2 924 319
- WO-A1-2005/116483
- WO-A1-2011/090958
- DE-B3- 10 257 973

## Beschreibung

### Stand der Technik

Die vorliegende Erfindung betrifft eine Antriebsanordnung und ein Fahrzeug. Die vorliegende Erfindung betrifft insbesondere eine Antriebsanordnung eines mit Muskelkraft und/oder - zusätzlich - mit Motorkraft antreibbaren Fahrzeuges, eines Elektrofahrrades, eBikes, Pedelecs oder dergleichen sowie ein mit Muskelkraft und/oder - gegebenenfalls zusätzlich - mit Motorkraft antreibbares Fahrzeug, ein Elektrofahrrad, eBike, Pedelec oder dergleichen.

Oft werden Fahrräder, Elektrofahrräder und dergleichen am angetriebenen Hinterrad mit einer Ketten- oder Nabenschaltung ausgebildet. Alternativ dazu können auch Tretlagerantriebe mit einem integrierten Schaltgetriebe vorgesehen werden.

Problematisch ist bei bekannten Antriebsanordnungen mit am Tretlager angeordneten Schaltgetrieben deren gesteigerte Größe und/oder ihr mangelnder Wirkungsgrad. Dies betrifft insbesondere am Tretlagerantrieb ausgebildete Reibringgetriebe, Schaltgetriebe mit Hohlwellenmotor oder dergleichen. Auch ist ein Mangel an Lastschaltfähigkeit, Zugkraftunterbrechungsfreiheit und das Auftreten von Leerwegen bei bekannten Antriebsanordnungen nachteilig.

Eine gattungsgemäße Antriebsanordnung wird in dem Dokument DE 102 57 973 B3 gezeigt.

### Offenbarung der Erfindung

Die erfindungsgemäße Antriebsanordnung mit den Merkmalen des Anspruchs 1 weist demgegenüber den Vorteil auf, dass bei vergleichsweise kleinem Bauraum im Bereich des Tretlagers die Drehmomentübertragung mit einem vergleichsweise hohen Wirkungsgrad, das heißt bei reduzierten Verlusten, und darüber hinaus auch unter Last und somit ohne Unterbrechung der Zugkraft bei besonders geringen oder gar verschwindenden Leerwegen erfolgen kann. Dies wird erfindungsgemäß mit den Merkmalen des unabhängigen Anspruches 1 dadurch erreicht, dass eine Antriebsanordnung geschaffen wird für ein mit Muskelkraft und/oder - zusätzlich - mit Motorkraft antreibbares Fahrzeug, insbesondere für ein Elektrofahrrad, eBike, Pedelec oder dergleichen, mit einer um eine Drehachse drehbaren Kurbelwelle zum Aufnehmen eines ersten und insbesondere mit Muskelkraft erzeugten Drehmomentes und mit einer Übertragungseinrichtung, welche zum Übertragen des ersten Drehmomentes von der Kurbelwelle an ein mit einem Antriebsrad des Fahrzeuges koppelbares Abtriebselement und mittels eines - insbesondere automatisch - schaltbaren mehrstufigen Planetengetriebes zu einer variablen Übersetzung ausgebildet ist. Erfindungsgemäß ist die Übersetzung des Planetengetriebes über einen Gangwechsel und durch gesteuertes Verbinden und/oder Freigeben jeweiliger Sonnenräder entsprechender Planetenstufen über ein mit dem jeweiligen Sonnenrad drehfest gekoppeltes Mitnehmerelement einstellbar. Das jeweilige Mitnehmerelement ist erfindungsgemäß radial und/oder axial außerhalb zumindest des jeweils gekoppelten Sonnenrades angeordnet in Bezug auf die Drehachse des Sonnenrades. Die Verwendung eines Planetengetriebes als formschlüssiges Getriebe erzielt einen besonders hohen Wirkungsgrad beim Übertragen des Drehmoments in Abtriebsrichtung. Darüber hinaus ist durch das Vorsehen von mit den jeweiligen Sonnenrädern drehfest gekoppelten Mitnehmerelementen außerhalb des jeweils gekoppelten Sonnenrades ein besonders zuverlässiges Verbinden, Blockieren oder Sperren und/oder Freigeben oder Entsperren der jeweiligen Sonnenräder möglich, weil auf Grund der achsenfernen Anordnung der Mitnehmerelemente und auf Grund der dadurch bei gleichem Moment reduzierten Kräfte mit besonders geringen Ausfällen und Verschleißerscheinungen zu rechnen ist.

Erfindungsgemäß kann das jeweilige Mitnehmerelement in Bezug auf die Drehachse des Sonnenrades auch radial innerhalb, aber axial außerhalb des Sonnenrades ausgebildet sein. Bei größeren Sonnenrädern können sich die Mitnehmerelemente innerhalb des Radius der Sonnenräder, aber seitlich davon beabstandet befinden und dennoch im Vergleich zu den üblichen Klinken oder Ziehkeilen achsfern mit den entsprechenden Vorteilen bezüglich der Kräfte angeordnet sein.

Die Unteransprüche zeigen bevorzugte Weiterbildungen der Erfindung.

Bei einer besonders zuverlässigen Weiterbildung der erfindungsgemäßen Antriebsanordnung ist das Mitnehmerelement jeweils an einem oder als ein radial außen liegender oder äußerster Abschnitt eines mit dem jeweiligen Sonnenrad drehfest gekoppelten Schaltfingers ausgebildet. Auf diese Weise kann die Struktur des Mitnehmerelements unabhängig von der Kopplung an das Sonnenrad in geeigneter Weise ausgestaltet werden, um einen Gangwechsel besonders zuverlässig auszuführen.

Strukturelle besonders einfache Verhältnisse, auch im Hinblick auf den Montagevorgang, stellen sich ein, wenn der jeweilige Schaltfinger mit einerinsbesondere ringförmigen - Basis zur drehfesten Kopplung mit dem jeweiligen Sonnenrad und einem sich von der Basis im Wesentlichen radial nach außen erstreckenden Radialabschnitt ausgebildet ist. Die insbesondere ringförmige Basis erlaubt eine besonders zuverlässige drehfeste Kopplung mit dem jeweiligen Sonnenrad, z.B. durch eine direkte Verbindung mit diesem. Durch die Ausgestaltung von Klauen zur Realisierung der Mitnehmerelemente, lassen sich unterschiedliche Formgebungen einbringen, (a) um eine gegenseitige Störung einer Mehrzahl von Mitnehmerelementen und einer entsprechenden Mehrzahl von Sonnenrädern zu verhindern und gleichwohl einen zuverlässigen Gangwechsel durch gesteuertes selektives und/oder kombiniertes Sperren und Freigeben zu ermöglichen und (b) um eine in axialer Richtung besonders kompakte Bauweise oder Auslegung der Antriebseinheit zu erzielen. Dadurch kann vermieden werden, dass eine vorgesehene Schaltkulisse je nach gewähltem Gang seitlich weit über ein Kettenblatt als Abtriebselement hinausragt.

Für den Benutzer stellt sich in der Anwendung ein besonders gleichförmiger Betrieb ein, wenn gemäß einer anderen bevorzugten Weiterbildung der erfindungsgemäßen Antriebsanordnung ein Radialabschnitt eines jeweiligen Schaltfingers einen elastischen Abschnitt aufweist oder bildet, welcher in Bezug auf die Drehachse des jeweils zu Grunde liegenden Sonnenrades tangential oder in Umfangsrichtung elastisch deformierbar ist, um bei einem Anschlag oder einer Freigabe des jeweiligen Mitnehmerelements eine ruckarme oder -freie Bewegung des zu Grunde liegenden Sonnenrades zu bewirken.

Zur Vermeidung von Leerwegen der Tretkurbeln ohne Leistungsübertragung vom Fahrer zu einem Abtriebselement bei allen Schaltvorgängen durch eine Umlaufzeit der Mitnehmerelemente ist es in vorteilhafterweise bei einer Weiterbildung vorgesehen, dass mehrere Mitnehmerelemente über einen mechanisch selbstschaltenden Freilauf mit einem jeweiligen Sonnenrad verbunden ist, insbesondere im Zusammenhang mit einem Drehrichtungswechsel der zugehörigen Sonnenräder bei einem Gangwechsel und/oder mit einem Festhalten der jeweiligen Mitnehmerelemente in beiden Drehrichtungen, insbesondere durch einen Stellantrieb, z.B. in Form einer Schaltkulisse.

Einige Mitnehmerelemente bzw. Schaltfinger können also über einen mechanisch selbstschaltenden Freilauf mit einem zugehörigen Sonnenrad verbunden sein.

Des Weiteren ist bei einer vorteilhaften Weiterbildung eine koaxiale Anordnung des mehrstufigen Planetengetriebes zur Drehachse und somit zur Kurbelwelle besonders platzsparend und führt zu einer vergleichsweise kompakten Bauform.

Die kompakte Bauweise der erfindungsgemäßen Antriebsanordnung im Sinne eines Tretlagerschaltgetriebes kann alternativ oder zusätzlich gesteigert werden, indem das Planetengetriebe auch zu einem rotationssymmetrisch ausgebildeten Abtriebselement koaxial ausgebildet wird, so dass sich eine Anordnung ergibt, bei welcher das Abtriebselement als rotationssymmetrische Komponente koaxial zur Drehachse der Kurbelwelle und zum Planetengetriebe ausgebildet ist. Das Abtriebselement kann vorzugsweise als Kettenblatt oder Zahnriemenblatt, je nach Antriebsart, ausgebildet sein.

Eine weitere Fortbildung der erfindungsgemäßen Antriebsanordnung weist eine erweiterte Anzahl an Gängen und/oder an schaltbaren Übersetzungen auf, nämlich durch den Einsatz von einem oder von mehreren Freiläufen, insbesondere für die Realisierung einer Übersetzung von 1:1, in einem Stufenplanetengetriebe mit einer Übersetzung ins Schnelle und/oder in der Gesamtübersetzung durch einen Direktgang. Dabei kann es insbesondere vorgesehen sein, dass diese Übersetzungen nicht aktiv schaltbar, sondern mechanisch selbstschaltend ausgebildet sind.

Eine besonders bequeme Handhabung ergibt sich für den Anwender dann, wenn gemäß einer nicht beanspruchten Antriebsanordnung das Planetengetriebe eine Mehrzahl von Gängen definiert, insbesondere mit einer Anzahl von sieben Gängen, mit Gangsprüngen, die konstant sind, nicht mehr als im Mittel etwa 26 % betragen und/oder im Einzelfall im Bereich von etwa 25 % bis etwa 27 % liegen, eine Gesamtspreizung von etwa 400 % definieren und/oder im Zusammenhang stehen mit einem zusätzlichen Direktgang und dem Einsatz eines Freilaufes, durch welchen in einem Planetengetriebe mit einer Übersetzung ins Schnelle ein Sonnenrad mit einem Planetensteg verbindbar ist. Jedoch sind auch andere Ausgestaltungen denkbar.

Verluste auf Grund von Reibung und dergleichen lassen sich in geeigneter Weise kontrollieren, indem das Planetengetriebe mit einer entsprechenden Zahl von Schaltgetriebeschaltstufen ausgebildet wird, beispielsweise mit höchstens vier Schaltgetriebeschaltstufen. Es sind jedoch auch andere Anzahlen von Schaltgetriebeschaltstufen realisierbar.

Bei einer konkreten Ausgestaltungsform der erfindungsgemäßen Antriebsanordnung ist es vorgesehen, dass die Getriebeschaltstufen gebildet werden von (i) einem ersten und insbesondere zweistufigen Planetengetriebe mit Gesamtübersetzung ins Schnelle und (ii) einem dazu in Reihe geschalteten zweiten und insbesondere zweistufigen Planetengetriebe mit Gesamtübersetzung ins Langsame, insbesondere einem Planetengetriebe in der Form eines Stufenplanetengetriebes, d.h. mit Planetenrädern, welche mehrere Stufen aufweisen, die drehfest miteinander verbunden sind.

Dabei kann den Getriebeschaltstufen insbesondere (iii) eine Hochtreiberstufe mit einem oder in Form eines Planetengetriebes mit Übersetzung ins Schnelle zur Reduktion eines hohen Fahrerdrehmomentes eingangsseitig vorgeschaltet sein. Alternativ oder zusätzlich können (iv) die beiden in Reihe geschalteten Planetengetriebe der Getriebeschaltstufen über ein gemeinsames Hohlrad miteinander gekoppelt sein.

Bei der erfindungsgemäßen Antriebsanordnung wird ein besonders zuverlässiger Gangwechsel dadurch ermöglicht, dass dieser über einen Stellantrieb durchführbar ist, mittels einer in Bezug auf die Drehachse der Kurbelwelle und/oder der Sonnenräder radial beabstandeten und gesteuert achsenparallel positionierbaren Schaltkulisse mit einer Mehrzahl von Anschlagselementen für die Mitnehmerelemente.

Die vorliegende Erfindung lässt sich nicht nur bei rein mit Muskelkraft betriebenen Fahrzeugen, z.B. bei klassischen Fahrrädern, anwenden, sondern insbesondere bei Elektrofahrrädern, eBikes, Pedelecs oder dergleichen, wie dies eingangs bereits erwähnt wurde.

Bei einer nicht beanspruchten Antriebsanordnung ist es daher vorgesehen, dass ein elektrischer Antrieb zum Erzeugen eines Motordrehmoments ausgebildet ist und dass der elektrische Antrieb zum Übertragen des Motordrehmomentes über das Planetengetriebe steuerbar an das Abtriebselement koppelbar ist.

Bei einer nicht beanspruchten Antriebsanordnung weist der elektrische Antrieb einen Hohlwellenmotor mit einer ausgangsseitigen Hohlwelle auf.

Dabei kann der Hohlwellenmotor insgesamt oder zumindest mit seiner Hohlwelle koaxial zur Drehachse der Kurbelwelle, zum Planetengetriebe, zum eingangsseitigen Planetensteg des Planetengetriebes und/oder zu einem Sonnenrad einer etwaig vorgesehenen Hochtreiberstufe angeordnet und ausgebildet sein.

Zusätzlich oder alternativ kann die Hohlwelle des Hohlwellenmotors mittelbar, zum Beispiel über ein Motorreduziergetriebe, oder unmittelbar mit dem eingangsseitigen Planetensteg des Planetengetriebes und/oder mit dem Sonnenrad einer etwaig vorgesehenen Hochtreiberstufe gekoppelt oder koppelbar sein, insbesondere in steuerbarer Weise.

Dabei können die Ankopplung des elektrischen Antriebes und somit die Übertragung des Motordrehmomentes von der Motorwelle auf das Planetengetriebe in verschiedener Art und Weise realisiert sein.

Bei einer nicht beanspruchten Antriebsanordnung ist es dazu vorgesehen, dass zwischen dem elektrischen Antrieb und dem Planetengetriebe ein Motorreduziergetriebe ausgebildet ist, zum Beispiel in Form eines mehrstufigen Stirnradgetriebes, eines Planetengetriebes oder eines Stufenplanetengetriebes, mit koaxialer Anordnung zur Hohlwelle des Hohlwellenmotors, zur Drehachse der Kurbelwelle, zum Planetengetriebe, zum eingangsseitigen Planetensteg des Planetengetriebes und/oder zum Sonnenrad einer etwaig vorgesehenen Hochtreiberstufe und/oder in im Hohlwellenmotor integrierter Form.

Ein radial besonders kompakter Aufbau ergibt sich, wenn gemäß einer alternativen und nicht beanspruchten Antriebsanordnung zwischen dem elektrischen Antrieb und dem Planetengetriebe ein Motorreduziergetriebe in Form eines Evoloidgetriebes ausgebildet ist. Diese kann innen- oder außenverzahnt ausgebildet sein.

Unabhängig von der Art und Weise, wie das Motorreduziergetriebe konfiguriert ist, ist es von besonderem Vorteil, wenn ein, mehrere oder sämtliche Komponenten des jeweiligen Motorreduziergetriebes mit oder aus einem Kunststoffmaterial gefertigt sind. Damit lassen sich die Betriebsgeräusche und/oder deren Übertragung bei der erfindungsgemäßen Antriebsanordnung weiter reduzieren.

Besonders bevorzugt ist eine Antriebsanordnung, welche den Aufbau eines Mittelmotorantriebs aufweist und insbesondere ein gemeinsames Gehäuse umfasst, in welchem das Planetengetriebe, der Stellantrieb, der elektrische Antrieb, das Motoreduziergetriebe und - zumindest teilweise - die Kurbelwelle aufgenommen sind.

Die vorliegende Erfindung betrifft des Weiteren ein mit Muskelkraft und/oder - zusätzlich - mit Motorkraft antreibbares Fahrzeug und insbesondere ein Elektrofahrrad, eBike, Pedelec oder dergleichen. Das erfindungsgemäße Fahrzeug weist mindestens ein Rad auf sowie eine erfindungsgemäß ausgebildete Antriebsanordnung, mit welcher das mindestens eine Rad des Fahrzeuges antreibbar ist.

### Kurzbeschreibung der Figuren

Unter Bezugnahme auf die beigefügten Figuren werden Ausführungsformen der Erfindung im Detail beschrieben.
- Figur 1: ist eine schematische Darstellung eines Beispiels eines Fahrzeuges nach Art eines Elektrofahrrades, bei welchem eine erste Ausführungsform der Erfindung realisiert ist;
- Figur 2: ist eine schematische Draufsicht auf eine Ausführungsform der erfindungsgemäßen Antriebsanordnung mit Kurbeltrieb und mit elektrischem Antrieb;
- Figuren 3 und 4: zeigt die Ausführungsform der erfindungsgemäßen Antriebsanordnung gemäß Figur 2 in zwei unterschiedlichen Betriebszuständen sowie die dabei auftretenden Kraft- und Drehmomentflüsse;
- Figur 5: ist eine schematische Draufsicht auf eine andere Ausführungsform der erfindungsgemäßen Antriebsanordnung mit Kurbeltrieb und mit einem elektrischen Antrieb mit alternativer Ankopplung;
- Figur 6: zeigt eine seitliche Ansicht einer anderen Ausführungsform der erfindungsgemäßen Antriebsanordnung;
- Figur 7A bis 7C: zeigen eine Schaltkulisse, die im Zusammenhang mit einer Ausführungsform der erfindungsgemäßen Antriebsanordnung zum Gangwechsel eingesetzt werden kann;
- Figur 8: zeigt in perspektivischer Seitenansicht einen Schaltfinger, der bei einer Ausführungsform der erfindungsgemäßen Antriebsanordnung eingesetzt werden kann;
- Figur 9: zeigt die Ausführungsform der erfindungsgemäßen Antriebsanordnung aus Figur 6 mit Fokus auf die Antriebskomponenten für die Schaltkulisse;
- Figur 10: zeigt in perspektivischer Seitenansicht die Ausführungsform der erfindungsgemäßen Antriebsanordnung gemäß den Figuren 6 und 9 mit Fokus auf den elektrischen Antrieb;
- Figur 11: zeigt die Ausführungsform der erfindungsgemäßen Antriebsanordnung aus Figur 10 in geschnittener Darstellung;
- Figuren 12A bis 12D: zeigen Seitenansichten verschiedener Schaltfinger, die bei einer Ausführungsform der erfindungsgemäßen Antriebsanordnung verwendet werden können.

### Bevorzugte Ausführungsformen der Erfindung

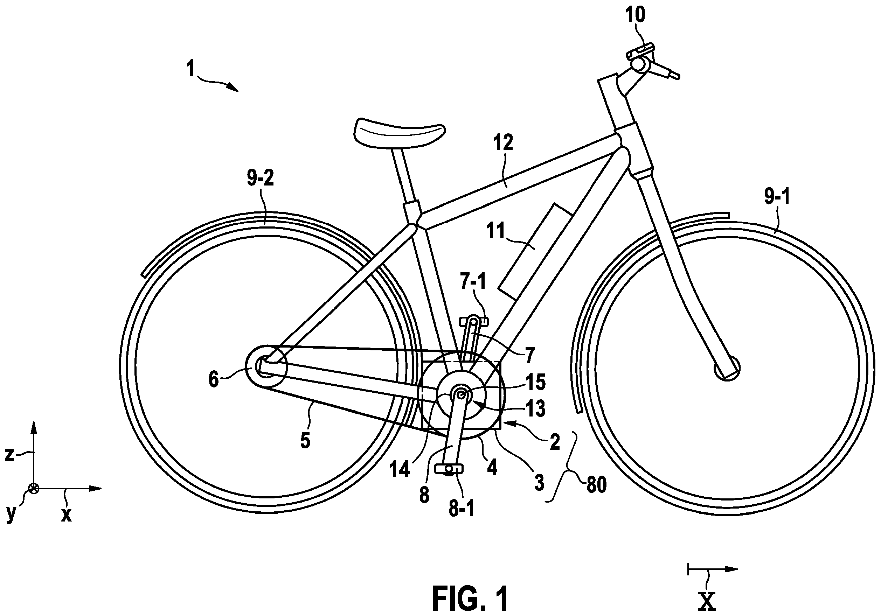

Nachfolgend werden unter Bezugnahme auf die Figuren 1 bis 12D Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weitere Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist ein Ritzel 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem gegebenenfalls ausgebildeten elektrischen Antrieb 3 verbunden ist. Im oder am Rahmen 12 ist ferner eine Batterie 11 ausgebildet, welche zur Stromversorgung des elektrischen Antriebes 3 dient.

Im Rahmen 12 integriert ist ein Kurbellager 13 oder Tretlager, welches ein Kurbelgehäuse 14 und eine Kurbelwelle 15 aufweist.

Die erfindungsgemäße Antriebsanordnung 80 des erfindungsgemäßen Fahrzeuges 1 aus Figur 1 weist den Kurbeltrieb 2 und den elektrischen Antrieb 3 auf, wobei die von diesen erzeugbaren Drehmomente über eine entsprechende und in Figur 1 nicht dargestellte Übertragungseinrichtung 20 mit einem schaltbaren mehrstufigen Planetengetriebe 21 aufnehmbar und an das Kettenblatt als Abtriebselement 4 übertragbar sind.

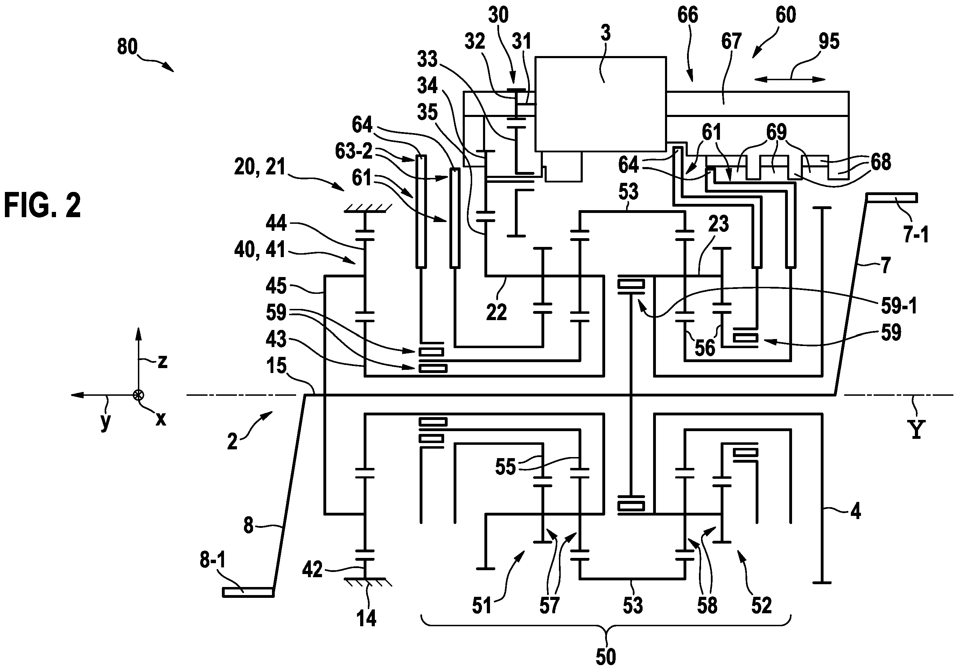

Figur 2 ist eine schematische Draufsicht auf eine Ausführungsform der erfindungsgemäßen Antriebsordnung 80 mit einem elektrischen Antrieb 3 und einem Kurbeltrieb 2.

Zur Übertragung von Drehmomenten vom Kurbeltrieb 2 und vom elektrischen Antrieb 3 ist eine Übertragungseinrichtung 20 ausgebildet, welche ein mit einem koaxial zu der durch die Kurbelwelle 15 definierten Drehachse Y angeordnetes Planetengetriebe 21 aufweist.

Das Planetengetriebe 21 besteht aus einer Hochtreiberstufe 40 mit einem Planetengetriebe 41 der Hochtreiberstufe 40 einerseits und einem mehrstufigen Schaltgetriebe 50 mit einem ersten und hier zweistufigen Planetengetriebe 51, nämlich eingangsseitig, der Hochtreiberstufe 40 zugewandt und vom Abtriebselement 4 abgewandt, und einem zweiten und hier zweistufigen Planetengetriebe 52, nämlich ausgangsseitig, dem Abtriebselement 4 zugewandt und der Hochtreiberstufe 40 abgewandt.

Die ersten und zweiten Planetengetriebe 51 und 52 des Schaltgetriebes 50 weisen entsprechende erste und zweite Sonnenräder 55 bzw. 56 und den Sonnenrädern 55, 56 zugeordnete Planetenräder 57 bzw. 58 auf, die an Planetenstegen 22, 23 gelagert und über ein gemeinsames Hohlrad 53 gekoppelt sind.

Über lösbare Verbindungen wird die Verbindung der Sonnenräder 55, 56 mit dem Gehäuse 14 der Antriebsordnung 80 in gesteuerter Art und Weise bewirkt. Dies geschieht bei der Ausführungsform gemäß Figur 2 über das gesteuert schaltbare Sperren oder Freigeben der mit den Sonnenrädern 55, 56 drehfest verbundenen und umlaufenden Mitnehmerelemente 64 an den distalen Enden 63-2 der Schaltfinger 61 mit den Anschlagselementen 68 am Kulissenkörper 67 der Schaltkulisse 66, die im Zusammenhang mit der Verstelleinheit 60, die auch als Stellantrieb 60 bezeichnet werden kann, von der Drehachse Y beabstandet aber achsenparallel zu dieser in der Pfeilrichtung 95 verschiebbar ist.

Jedes der Sonnenräder 55 des ersten Planetengetriebes 51 und jedes der Sonnenräder 56 des zweiten Planetengetriebes 52 der Getriebeschaltstufen 50 weist einen eigenen und mit dem jeweiligen Sonnenrad 55, 56 drehfest gekoppelten Schaltfinger 61 auf. Die Mitnehmerelemente 64, die auch als Klauen oder als Mitnehmerklauen bezeichnet werden können und sich am jeweiligen distalen Ende 63-2 der Schaltfinger 61 befinden, sind in Bezug auf die Lücken 69 und die Anschlagselemente 68, die auch als Widerlagerelemente oder Kulissenklauen bezeichnet werden können, so abgestimmt angeordnet, dass durch Verschieben der Schaltkulisse 66 entlang der Pfeilrichtung 95 ein getrenntes oder kombiniertes Freigeben oder Sperren der einzelnen Sonnenräder 55 und 56 der ersten und zweiten Planetengetriebe 51, 52 der Getriebeschaltstufen 50 des Schaltgetriebes erreicht werden kann.

Ferner ist an verschiedenen Stellen des Schaltgetriebes 50 jeweils ein Freilauf 59 bzw. 59-1 ausgebildet, wobei der Freilauf 59-1 im Zusammenhang mit einem Direktgang steht.

Die Hochtreiberstufe 40 mit dem Planetengetriebe 41 zum Einbringen des mit Muskelkraft erzeugten Drehmomentes weist ein Hohlrad 42, ein innenlaufendes Sonnenrad 43 sowie einen dazwischen laufenden Planetensteg 45 mit Planeten 44 der Hochtreiberstufe 40 auf.

Andererseits wird das vom elektrischen Antrieb 3 erzeugte Motordrehmoment durch die Motorwelle 31 an das Motorreduziergetriebe 30 abgegeben und letztlich an ein Stirnrad 35 als Abtriebselement des Motorreduziergetriebes 30 übertragen, welches materiell verbunden ist mit dem eingangsseitigen Planetensteg 22 des Schaltgetriebes 50.

In dem in Figur 2 dargestellten Fall besteht das Motorreduziergetriebe 30 aus einer Anordnung mehrerer Stirnräder 32 bis 34, die das Motordrehmoment abtriebsseitig auf das mit dem eingangsseitigen Planetensteg 22 gekoppelte Stirnrad 35 übertragen.

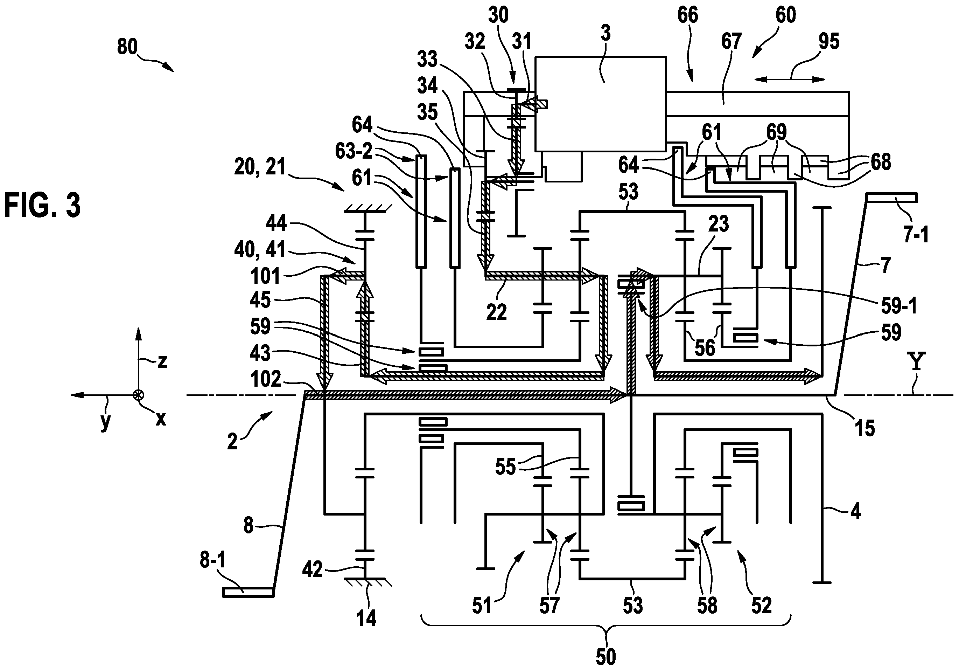

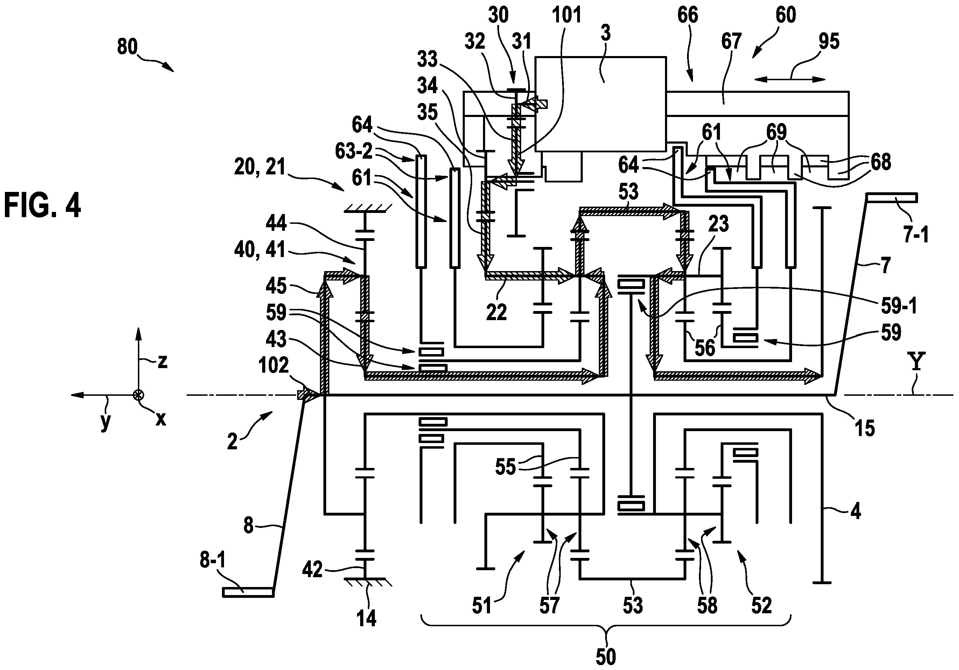

Die Figuren 3 und 4 zeigen noch einmal die Ausführungsform der erfindungsgemäßen Antriebsanordnung 80 aus der Figur 2, jedoch mit den Kraft-, Drehmomenten- und Leistungsflüssen 101, 102 in Bezug auf die Fahrer- und die Motorleistung in einem ersten Gang bzw. im zweiten bis siebten Gang der Anordnung aus Figur 1.

Die Leistungsflüsse des Motors sind jeweils mit dem Bezugszeichen 101 und die Leistungsflüsse des Fahrers mit dem Bezugszeichen 102 bezeichnet.

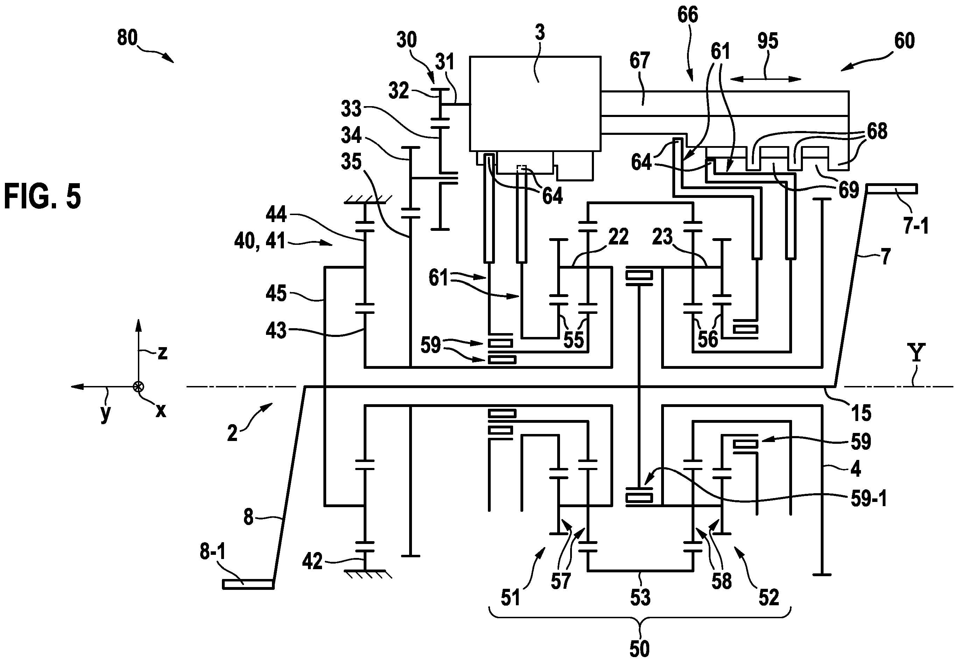

Figur 5 zeigt eine andere Ausführungsform der erfindungsgemäßen Antriebsanordnung 80, bei welcher die Anbindung des Motors 3 mit dem Reduziergetriebe 30 axial nach links und somit außerhalb der Anordnung der Schaltfinger 61 für beide Planetengetriebe 51, 52 verschoben ist.

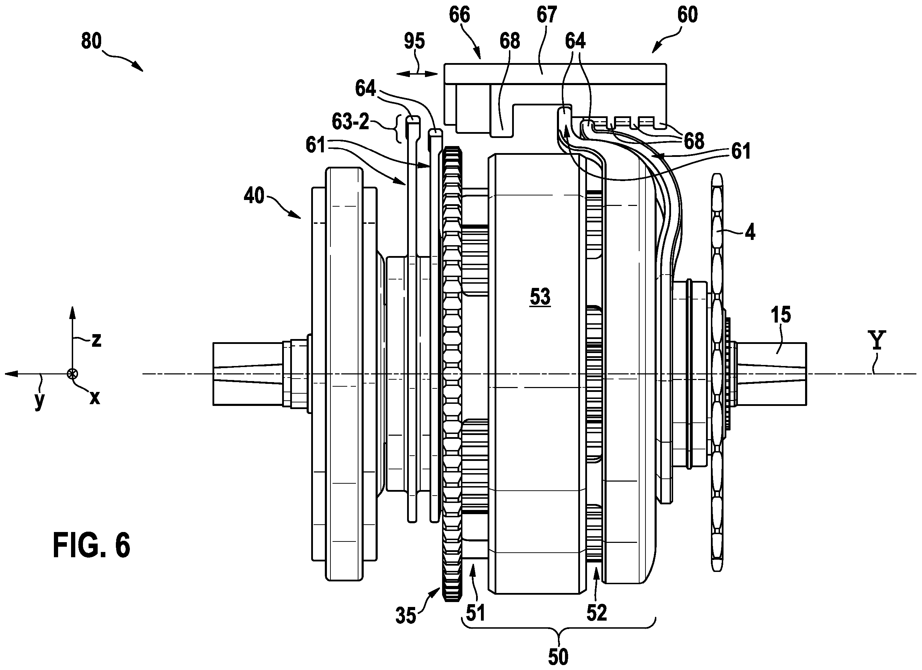

Figur 6 zeigt eine Seitenansicht einer anderen Ausführungsform der erfindungsgemäßen Antriebsanordnung 80, und zwar mit einer Blickrichtung senkrecht auf die y-Richtung.

Zu erkennen sind die mit der Kurbelwelle 15 im Zusammenhang stehende Drehachse Y, um welche koaxial angeordnet sind das Abtriebselement 4 in Form eines Kettenblatts, das Schaltgetriebe 50 mit den entsprechenden Getriebeschaltstufen und den ersten und zweiten Planetengetrieben 51 und 52 und die Hochtreiberstufe 40. Zu erkennen sind des Weiteren die drehfest mit den Sonnenrädern 55 und 56 verbundenen Schaltfinger 61 mit den Mitnehmerelementen 64 an deren distalen Enden 63-2. Die weitere Kopplung der ersten und zweiten Planetengetriebe 51 und 52 erfolgt über das gemeinsame Hohlrad 53. Das Einbringen eines Motordrehmoments erfolgt über das ebenfalls koaxial vorgesehene Stirnrad 35 als Abtriebselement des Motorreduziergetriebes 30.

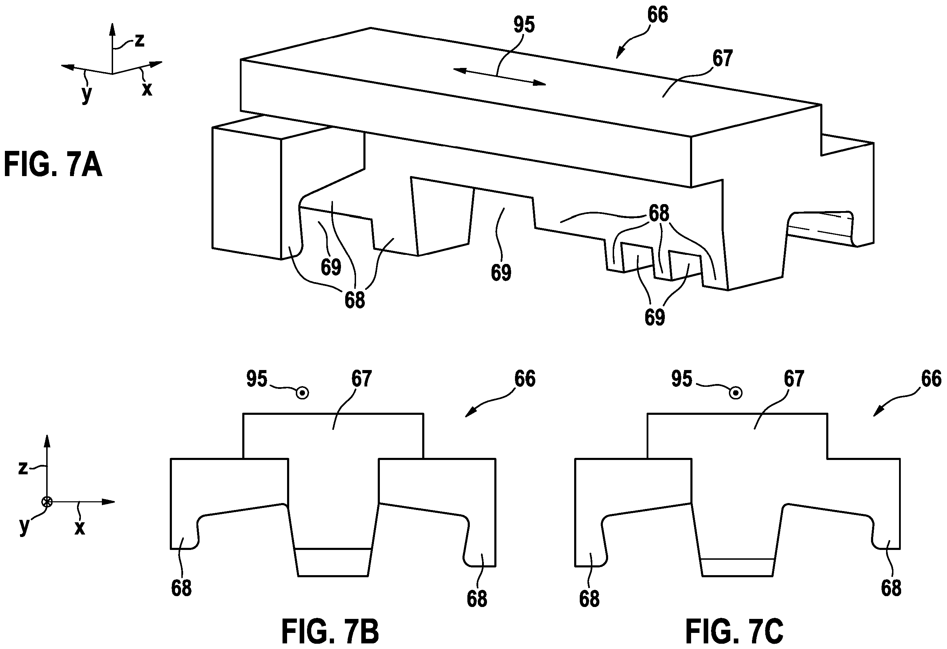

Die Figuren 7A bis 7C zeigen in einer perspektivischen Seitenansicht bzw. in seitlichen Draufsichten die bei einer Ausführungsform der erfindungsgemäßen Antriebsanordnung 80 verwendete Schaltkulisse 66 mit Kulissenkörper 67 und daran ausgebildeten Abfolgen von Anschlagselementen 68 mit dazwischen vorgesehenen Lücken 69. Diese Abfolge von Lücken 69 und Anschlagselementen 68 ermöglicht das gesteuerte und somit einzelne oder kombinierte Feststellen oder Freigeben der Sonnenräder 55, 56 der ersten und zweiten Planetengetriebe 51, 52 über entsprechend ausgebildete und drehfest mit den Sonnenrädern 55, 56 der Planetengetriebe 51, 52 gekoppelte Schaltfinger 61 mit den Mitnehmerelementen 64 an deren distalen Enden 63-2.

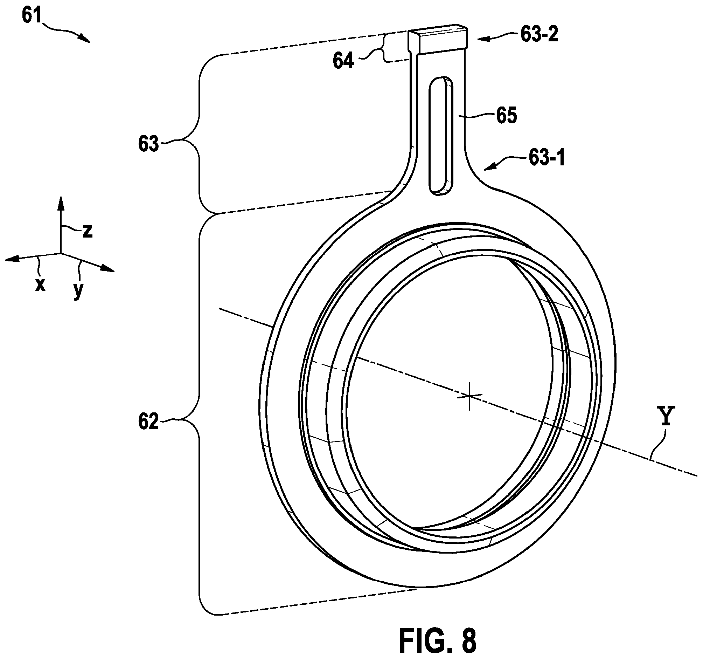

Figur 8 zeigt eine perspektivische Seitenansicht eines Schaltfingers 61, wie er im Zusammenhang mit der Verstelleinheit 60 einer Ausführungsform der erfindungsgemäßen Antriebsanordnung 80 verwendet werden kann.

Der Schaltfinger 61 besteht gemäß Figur 8 aus einer kreisringförmigen Basis 62, von der radial ein Radialabschnitt 63 bestimmter Länge entspringt. Das bedeutet, dass der Radialabschnitt 63 mit seinem proximalen Ende 63-1 an der Basis 62 angefügt ist. Dem proximalen Ende 63-1 gegenüberliegend ist das distale Ende 63-2 angeordnet, welches ein Mitnehmerelement 64 ausbildet. Der Bereich zwischen dem proximalen Ende 63-1 und dem distalen Ende 63-2 ist bei der Ausführungsform gemäß Figur 8 von einem elastischen Abschnitt 65 gebildet, der eine federnde Bewegung des Schaltfingers 61 in tangentialer oder Umfangsrichtung beim Eingehen oder Lösen eines Anschlags des Schaltfingers 61 ermöglicht. Dadurch wird eine ruckarme oder ruckfreie Koppelung und Entkoppelung eines Sonnenrades 55, 56 beim Gangwechsel ermöglicht.

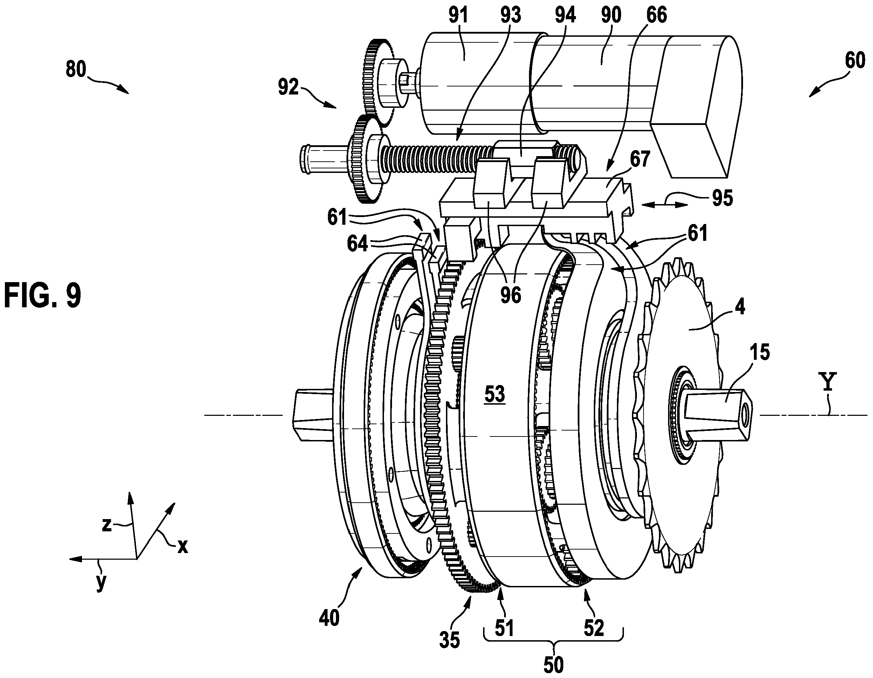

Figur 9 zeigt in einer seitlichen Ansicht eine andere Ausführungsform der erfindungsgemäßen Antriebsanordnung 80 mit Fokus auf den Stellantrieb 60, der auch als Verstelleinheit bezeichnet werden kann und der Bewegung der Schalkulisse 66 dient.

Dargestellt ist wiederum das Schaltgetriebe 50 mit den Getriebeschaltstufen, die durch ein erstes Planetengetriebe 51 und ein zweites Planetengetriebe 52 mit einem gemeinsamen Hohlrad 53 realisiert werden. Eingangsseitig ist die Hochtreiberstufe 40 ausgebildet. Ausgangsseitig befindet sich das Abtriebselement 4 in Form eines Kettenblatts. Ferner ist das Zahnrad 35 der Stirnradstufe des Motorreduziergetriebes 30 zur Eingabe des Motordrehmoments dargestellt.

Die Hochtreiberstufe 40 mit dem entsprechenden Planetengetriebe 41, das Zahnrad 35 der Stirnradstufe des Motorreduziergetriebes 30, die Getriebeschaltstufen 50 mit dem ersten und zweiten Planetengetriebe 51 bzw. 52, die zum Ausführen des Schaltvorgangs notwendigen Schaltfinger 61 mit den Mitnehmerelementen 64 an deren distalen Enden 63-2 und das Abtriebselement 4 sind konzentrisch und koaxial in Bezug auf die Drehachse Y der zu Grunde liegenden Kurbelwelle 15 ausgebildet.

Die Schaltkulisse 66 der Verstelleinheit 60 weist auf der dem Schaltgetriebe 50 zugewandten Seite eine Abfolge von Anschlagselementen 68 am Kulissenkörper 67 mit dazwischen vorgesehenen Lücken 69 auf. Die Anschlagselemente 68 und die Lücken 69 sind so ausgebildet und angeordnet, dass durch das Bewegen des Kulissenkörpers 67 entlang der Verschiebungsrichtung 95, hier parallel zur Rotationsachse Y der Kurbelwelle 15, gesteuert und wahlweise die Mitnehmerelemente 64 der Sonnenräder der ersten und zweiten Planetengetriebe 51, 52 selektiv einzeln oder kombiniert miteinander in ihrer Rotation mit den Sonnenrädern 55, 56 freigegeben oder festgestellt werden können.

In der Ausführungsform gemäß Figur 9 erfolgt die Bewegung des Kulissenkörpers 67 der Schaltkulisse 66 entlang der Richtung des Pfeiles 95 über einen Antrieb mit Motor 90, Planetengetriebe 91, Stirnradgetriebe 92, daran ansetzender Spindel 93 und einer mit der Spindel 93 eingreifender Spindelmutter 94, an welcher ein Sattel 96 nach Art einer Gleitlagerung zum Führen der Schaltkulisse 66 angebracht ist.

Durch Betätigung des Motors 90 des Antriebs für die Schaltkulisse 66 erfolgt über die Drehung der Spindel 93 und entsprechendes Mitführen der Spindelmutter 94 das Verschieben des Kulissenkörpers 67 in der Richtung des Verschiebungspfeils 95. Der Betrieb des Motors 90 und somit das Verschieben des Kulissenkörpers 67 können unter Auswertung von Signalen einer hier nicht dargestellten Sensorik in gesteuerter Art und Weise so erfolgen, dass eine Kollision bei der Bewegung der Anschlagselemente 68, die auch als Kulissenklauen bezeichnet werden, und der umlaufenden Schaltfinger 61 mit den Mitnehmerelementen 64 in y-Richtung vermieden wird.

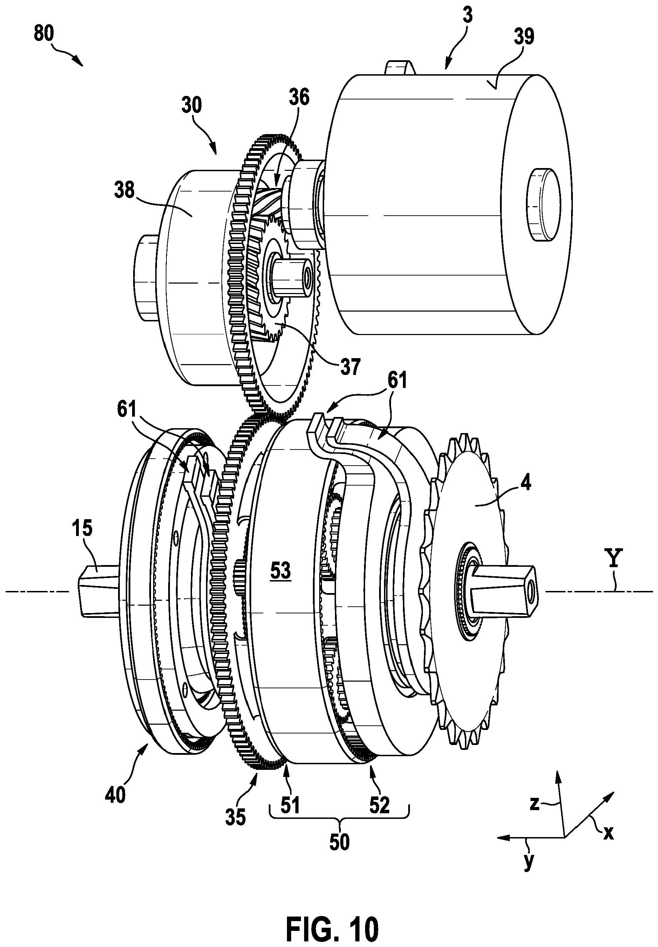

Figur 10 zeigt in Seitenansicht eine andere Ausführungsform der erfindungsgemäßen Antriebsanordnung 80 mit Fokus auf den elektrischen Antrieb 3 und dessen Motorreduziergetriebe 30.

Bei der Ausführungsform gemäß Figur 10 ist kein Stirnradgetriebe zur Übertragung des Drehmoments der Motorwelle 31 an das Zahnrad 35 der Stirnradstufe vorgesehen, sondern ein Evoloidgetriebe mit einem Evoloidritzel 36, welches an der Motorwelle 31 angebracht ist. Das Evoloidritzel kämmt mit einem Evoloidzahnrad 37. Außen am Hohlrad 38 befindet sich eine Verzahnung, die mit dem abtriebsseitigen Zahnrad 35 der Stirnradstufe des Motorreduziergetriebes 30 kämmt und das Drehmoment zur Abtriebsseite hin bereitstellt.

Der Motor 3 befindet sich in dem Kern nach im Inneren eines Motorgehäuses 39.

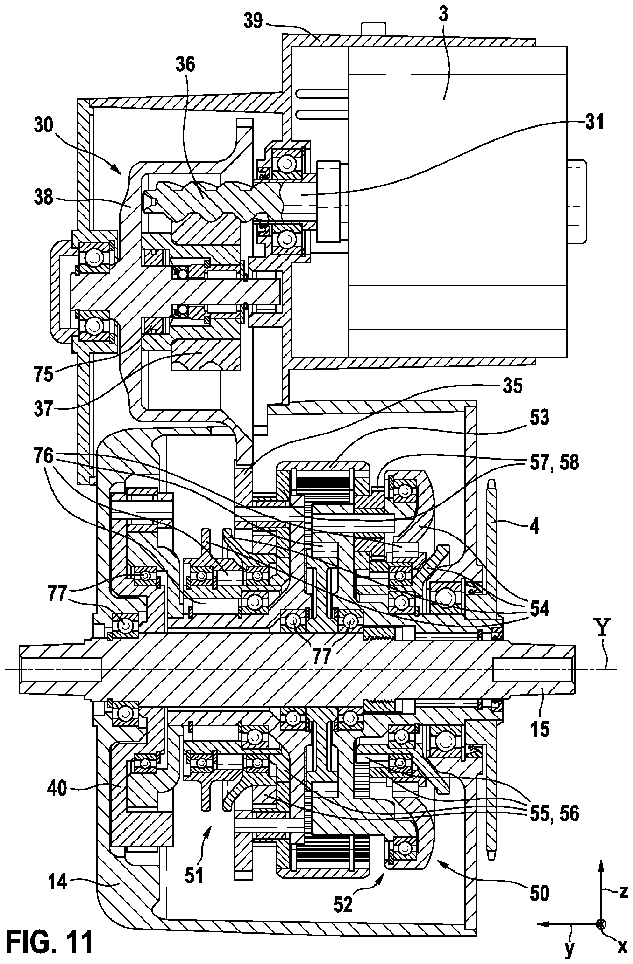

Figur 11 zeigt eine Schnittansicht einer anderen Ausführungsform der erfindungsgemäßen Antriebsanordnung 80.

Bei dieser besteht das Motorreduziergetriebe 30 ebenfalls aus einem Evoloidzahnrad 37 mit einem Evoloidritzel 36 auf der Motorwelle 31, welches mit dem Evoloidzahnrad 37 kämmt.

Der elektrische Antrieb 3 ist mit seinen wesentlichen Komponenten des Motorreduziergetriebes 30 in einem Gehäuse 39 untergebracht, welches seinerseits am Tretlagergehäuse 14 montiert ist oder einen Teil davon bildet.

Zusätzlich zu der in Figur 2 gezeigten Darstellung sind bei der Ausführungsform gemäß Figur 11 noch Dichtringe im Zusammenhang mit der Lagerung der Kurbelwelle 15 im Gehäuse 14 gezeigt.

Der elektrische Antrieb 3 bei der Ausführungsform der erfindungsgemäßen Antriebsanordnung 80 gemäß Figur 11 besitzt noch die Besonderheit eines Freilaufes 75 und von Freiläufen 76, die schematisch auch schon in Figur 2 gezeigt sind und selbst keine integrierte Lagerung aufweisen. Des Weiteren sind noch die Lager 77 und weitere Lager der Antriebsanordnung 80 gezeigt sowie die Verbindungen 54 zwischen den Schaltfingern 61 und den entsprechenden Sonnenrädern 55, 56.

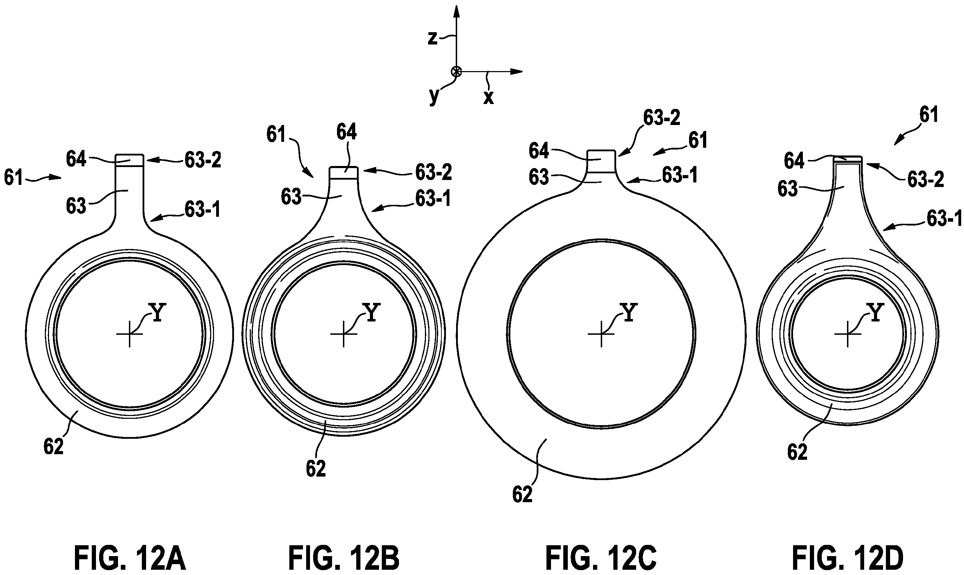

Figur 12 zeigt in Seitenansicht verschiedene Ausführungsformen der Schaltfinger 61, die bei einer Ausgestaltungsform der erfindungsgemäßen Antriebsanordnung 80 Verwendung finden können, z.B. als die vier Schaltfinger aus den Figuren 6, 9 und 10.

Die unterschiedlichen Ausgestaltungen beziehen sich auf die Gestalt der jeweiligen Basen 62 und der Länge und Stärke der sich daran mit ihren proximalen Enden 63-1 anschließenden Radialabschnitte 63 und auch auf die Ausgestaltung der Mitnehmerelemente 64 an den distalen Enden 63-2 der Radialabschnitte 63. Die Ausgestaltungen sind jeweils so angepasst, dass ein Übergreifen der Schaltfinger 61 z.B. durch klauenartige Ausgestaltung in y-Richtung des Übergangs vom Radialabschnitt 63 zum jeweiligen Mitnehmerelement 64 am distalen Ende 63-2 ohne gegenseitige Kollision erfolgen kann und um eine in axialer Richtung besonders kompakte Bauweise/Auslegung der Antriebseinheit zu erzielen, wobei die Schaltkulisse 66 beispielsweise sonst je nach gewähltem Gang seitlich weit über das Kettenblatt 4 hinausragen würde.

Diese und weitere Merkmale und Eigenschaften der vorliegenden Erfindung werden an Hand der folgenden Darlegungen weiter erläutert:
Die Erfindung betrifft insbesondere Elektrofahrräder, Pedelecs, eBikes und dergleichen, insbesondere mit Mittelmotorantrieb und einer Fahrradschaltung zur Anpassung der begrenzten Antriebskraft des Fahrers an die unterschiedlichen Fahrwiderstände.

Eine Zielsetzung der Erfindung ist die Schaffung einer Fahrradschaltung z.B. nach dem Grundprinzip einer Nabenschaltung und diese in eine Antriebsanordnung 80 am Tretlager 13 z.B. eines Pedelecs oder dergleichen zu integrieren.

Eine übliche Schaltvorrichtung am Hinterrad 9-2 kann dann erfindungsgemäß entfallen.

Dabei soll eine besonders kompakte Konfiguration einer Antriebsanordnung 80 mit hohem Wirkungsgrad erzielt werden, die lastschaltfähig ist, ein Schalten ohne Zugkraftunterbrechung erlaubt und dabei ohne oder mit einem verringerten Maß an Leerwegen auskommt.

Bekannt sind Tretlagerantriebe mit integriertem Schaltgetriebe, welche einen Hohlwellenmotor koaxial zur Tretkurbelwelle und ein zur Tretkurbelwelle achsparalleles Schaltgetriebe aufweisen.

Ferner ist die Integration eines Reibringgetriebes als stufenlos verstellbares Fahrradschaltgetriebe in einen Pedelec/eBike-Tretlagerantrieb bekannt. Ein Reibringgetriebe hat als reibschlüssiges Getriebe den Nachteil eines im Vergleich geringeren Wirkungsgrads, welcher sich auf die Batteriereichweite und die Fahrbarkeit ohne Motorunterstützung, insbesondere beim Fahren mit über 25 km/h bei Pedelecs, auswirkt.

Ein weiteres Konzept sind Tretlagerantriebe mit integrierten Schaltungen auf der Basis von Stirnradgetrieben. Diese haben den Nachteil einer vergleichsweise geringeren Drehmomentdichte. Auch sind sie insbesondere beim Herunterschalten in einen niedrigeren Gang nicht unter Last bzw. nur unter Teillast schaltbar. Des Weiteren weisen diese Schaltungen keine elektromechanisch aktuierte automatische Gangwahl auf.

Andere Konzepte haben den Nachteil, dass das Schalten nicht zugkraftunterbrechungsfrei erfolgt. Der Fahrer erfährt beim Schalten, insbesondere wenn er beschleunigt in die Pedale tritt, einen deutlich spürbaren Leerweg der Tretkurbeln.

Bei anderen bekannten Mechanismen erfolgt das Schalten durch Festhalten oder Freigeben von Zahnrädern mittels Klinken, welche um die zentrale Welle der Zahnräder angeordnet sind und radial von innen in den Radkörper formschlüssig eingreifen.

Die Erfindung hat z.B. auch die Aufgabe, eine lastschaltfähige, zugkraftunterbrechungsfreie und effiziente Automatikfahrradschaltung zu schaffen und in eine Antriebseinheit 80 am Tretlager 13 eines Pedelecs zu integrieren.

Eine Schaltvorrichtung am Hinterrad 9-2 kann entfallen. Dabei soll eine besonders kompakte Darstellung des Pedelec-Antriebs erzielt werden.

Die Erfindung löst die gestellte Aufgabe unter anderem mit dem Einsatz und der Integration eines schaltbaren Planetengetriebes 21 in koaxialer Anordnung zur Tretkurbelwelle 15 und Kettenblatt 4. Das schaltbare Planetengetriebe 21 übernimmt die Aufgabe der Fahrradschaltung bzw. der variablen Übersetzung für die Antriebskraft des Fahrers.

Das Variieren der Übersetzung bzw. Schalten erfolgt durch Blockieren oder Freigeben von Sonnenrädern 55, 56 eines Schaltgetriebes 50 des Planetengetriebes 21. Durch den Einsatz eines formschlüssigen Getriebes ist der Wirkungsgrad gegenüber einem integrierten reibschlüssigen Getriebe verbessert.

An den Sonnenrädern 55, 56 des Schaltgetriebes 50 sind jeweils seitlich Schaltfinger 61 angebracht, die mit den Sonnenrädern 55, 56 drehfest verbunden sind und mit diesen umlaufen.

Mittels einer Schaltkulisse 66, die achsenparallel zur Tretkurbelwelle 15 - also in Richtung des Doppelpfeiles 95 - angeordnet und axial in Richtung der Kurbelwellenachse Y verschiebbar ist, können die Schaltfinger 61 und damit die Sonnenräder 55, 56 einzeln oder kombiniert in beiden Drehrichtungen blockiert werden.

Mit den Schaltfingern 61 und der achsfernen Anordnung der Schaltkulisse 66 zur Tretkurbelwelle 15 kann bei entsprechender Länge der Schaltfinger 61 ein formschlüssiges Blockieren, Halten und Freigeben der Sonnenräder 55, 56 in größerem Abstand zur zentralen Achse Y der Sonnenräder 55, 56 und somit geringerem Kraftaufwand erfolgen.

Ein Variieren der Übersetzung bzw. Schalten unter Maximallast auch beim besonders kritischen Herunterschalten der Gänge wird hiermit verschleißfrei und unter Beibehaltung einer kompakten Darstellung der Zahnräder möglich.

Um einen Schaltschlag bei Blockade des Schaltfingers, respektive des Sonnenrads 55, 56 zu verringern, wird die Struktur des Schaltfingers 61 elastisch ausgeführt, z.B. durch einen elastischen Bereich 65 am oder im Radialabschnitt 63. Dabei erträgt der Schaltfinger 61 das maximal auftretende Bremsmoment an dem Sonnenrad 55, 56 ohne plastische Materialverformung.

Ein oder mehrere Schaltfinger 61 können über einen mechanisch selbstschaltenden Freilauf mit dem Sonnenrad 55, 56 verbunden sein. Dadurch ist es möglich, einen Leerweg der Tretkurbeln 7, 8 ohne Leistungsübertragung bei allen Schaltvorgängen zu vermeiden.

Bei den Schaltfingern 61 kann mittels der Schaltkulisse 66 in Kombination mit dem Freilauf bei einem Drehrichtungswechsel der zugehörigen Sonnenräder 55, 56 ein Wegdrehen der Schaltfinger 61 von der Schaltkulisse 66 verhindert werden, so dass bei Blockade der Sonnenräder 55, 56 kein Leerweg der Tretkurbeln 7, 8 ohne Leistungsübertragung durch die Umlaufzeit des Schaltfingers 61 bis zur Position der Schaltkulisse entsteht.

Erfindungsgemäß wird damit bei allen Schaltvorgängen Leistung vom Fahrer auf das Kettenblatt 4 bzw. Hinterrad 9-2 und damit zugkraftunterbrechungsfrei übertragen.

Das Verschieben der Schaltkulisse 66 für die Blockade der Schaltfinger 61 kann automatisch durch einen Elektromotor 90 mit Getriebe 91, 92 als Stellantrieb erfolgen.

Dazu wird die Drehposition des Schaltfingers 61 mittels eines Sensors erfasst und damit der Zeitpunkt der Verschiebung der Schaltkulisse 66 gesteuert. Hierdurch wird sichergestellt, dass sich die Schaltkulisse 66 vollständig in der richtigen Position befindet, wenn der Schaltfinger 61 die Position der Schaltkulisse 66 erreicht. Es werden so Fehlstellungen und Kantenbelastungen vermieden.

Eine besonders kompakte Darstellung mit hoher Effizienz und einer hohen Anzahl Schaltstufen bzw. schaltbaren Gängen wird durch die Realisierung des schaltbaren Planetengetriebes 50 als doppeltes Stufenplanetengetriebe mit Planetengetrieben 51 und 52 mit Verbindung der beiden Stufenplanetengetriebe 51, 52 über ein gemeinsames Hohlrad 53 und einer dem schaltbaren Planetengetriebe 50 vorgeschalteten Hochtreiberstufe 40, welche das hohe Drehmoment des Fahrers reduziert, erreicht.

Dabei übersetzt das dem Eingangsdrehmoment des Fahrers zugewandte Stufenplanetengetriebe 55 ins Schnelle und das dem Kettenblatt 4 zugewandte zweite Stufenplanetengetriebe 56 ins Langsame. In dem Stufenplanetengetriebe 55 mit der Übersetzung ins Schnelle können durch einen selbstschaltenden Freilauf zwei Wellen miteinander verbunden und damit in einfacher Weise zusätzlich die Übersetzung 1:1 in diesem Stufenplanetengetriebe 55 realisiert werden.

Dadurch und durch Kombination der schaltbaren Übersetzungen der beiden Stufenplanetengetriebe 55, 56 können somit insgesamt mehr Gänge als dargestellte Getriebestufen realisiert werden.

Eine weitere Gangstufe, ein Direktgang, ergibt sich in kompakter Weise durch die Verbindung der Tretkurbelwelle 15 mit dem Planetensteg 23 des ins Langsame übersetzenden Stufenplanetengetriebes 56 über einen Freilauf 59-1.

Wenn alle Sonnenräder 55, 56 des Planetenschaltgetriebes 50 nicht blockiert sind, verbindet der Freilauf 59-1 selbstschaltend die Tretkurbelwelle 15 mit dem Planetensteg 23 und damit auch direkt mit dem Kettenblatt 4.

Ein eingelegter bzw. geschalteter Direktgang führt zu einer weiteren Verbesserung des Wirkungsgrads.

An das koaxial zur Tretkurbelwelle 15 und Kettenblatt 4 angeordnete Schaltgetriebe 50 kann wahlweise ein Motor 3 über ein Reduziergetriebe 30 vorzugsweise zwischen Hochtreiberstufe 40 und Planetenschaltgetriebe 50 angebunden werden.

Figur 1 zeigt in einer bevorzugten Ausführung schematisch den Aufbau eines Pedelec/eBike-Tretlagerantriebs 80 mit einem integrierten lastschaltbaren Planetengetriebe 50 in koaxialer Anordnung zur Kurbelwelle 15 und Kettenblatt 4.

Das schaltbare Planetengetriebe 50 setzt sich aus zwei Stufenplanetengetrieben 51, 52 mit jeweils einem Stufenplaneten 57, 58, welcher aus zwei drehfest miteinander verbundenen Planeten mit unterschiedlichen Durchmessern besteht, zusammen. Beide Stufenplanetengetriebe 51, 52 sind über ein gemeinsames Hohlrad 53 miteinander verbunden.

Das dem Kettenblatt 4 zugewandte Stufenplanetengetriebe 56 übersetzt ins Langsame und das der Hochtreiberstufe 40 zugewandte Stufenplanetengetriebe 55 linksseitig neben dem Stufenplanetengetriebe 56 übersetzt ins Schnelle.

Durch seitlich an den Sonnenrädern 55, 56 des Planetenschaltgetriebes 50 angebrachte Schaltfinger 61 können die Sonnenräder 55, 56 einzeln oder in Kombination mittels einer Schaltkulisse 66 in ihrer Drehbewegung blockiert bzw. drehfest mit dem Gehäuse 14 verbunden und wieder freigegeben werden.

Durch das Blockieren und Freigeben der vier Sonnenräder 55, 56 können insgesamt vier Übersetzungen dargestellt werden.

Eine weitere Übersetzung ergibt sich innerhalb des linksseitigen Stufenplanetengetriebes 55 mit Übersetzung ins Schnelle durch die Verbindung des Planetenstegs 22 mit einem Sonnenrad 55 über einen Freilauf, wie dies in Figur 2 gezeigt ist. Dadurch kann zusätzlich die Übersetzung 1:1 in diesem Stufenplanetengetriebe 50 realisiert werden. Durch Kombination der Übersetzungen von beiden Stufenplanetengetrieben 51, 52 können dann insgesamt sechs Übersetzungen dargestellt werden.

Über einen weiteren Freilauf kann die Tretkurbelwelle 15 mit dem Planetensteg 23 des rechtsseitigen ins Langsame übersetzenden Stufenplanetengetriebes 56 und damit direkt mit dem Kettenblatt 4 verbunden werden.

Diese direkte Verbindung der Tretkurbelwelle 15 mit dem Kettenblatt 4 ergibt sich bei Freigabe bzw. Nichtblockade aller vier Sonnenräder 55, 56 des Planetenschaltgetriebes 50 und bedeutet für den Fahrer keine Übersetzung seiner Fahrerleistung zum Kettenblatt 4 bzw. die Übersetzung eins.

Mit dieser und den oben genannten sechs Übersetzungen können nun insgesamt sieben Übersetzungen für die Fahrerleistung zum Kettenblatt 4 zur Verfügung gestellt und damit eine Fahrradschaltung mit sieben Gängen für die Antriebskraft des Fahrers realisiert werden. Dabei bedeutet die Übersetzung eins ein Direktgang mit entsprechend besonders hohem Wirkungsgrad. Die beiden mittels Freilauf realisierten Übersetzungen müssen nicht aktiv geschaltet werden, sondern erfolgen durch die beiden Überholfreiläufe jeweils mechanisch selbstschaltend.

In der folgenden Tabelle sind die sieben realisierten Gänge des bevorzugten Ausführungsbeispiels aufgeführt. Die Übersetzungen reichen von Übersetzung 1 im ersten Gang, dem Direktgang, bis Übersetzung 0,25 im siebten Gang. Es ergibt sich eine Gesamtspreizung von 400% und Gangsprüngen von im Mittel ca. 26%. Damit wird eine erforderliche Entfaltung von 2 m bis 8 m für Standardräder abgedeckt.

Auf die erfindungsgemäße Weise können bei diesem Beispiel also besonders kompakt insgesamt sieben Gänge mit vier Schaltgetriebestufen 50 dargestellt werden. Die Schaltgetriebestufen 50 sind bevorzugt so ausgelegt, dass die Gangsprünge konstant sind und beispielsweise nicht größer als 25 % bis 27 %, wie dies in der nachfolgenden Tabelle aufgelistet ist.

Für die Gesamtspreizung des Schaltgetriebes können in diesem Beispiel bis zu 400 % erzielt werden. Wird ein Sonnenrad 55 mit dem Planetensteg 22 verbunden, ergibt sich für dieses Planetengetriebe 51 eine Gesamtübersetzung von 1:1.

| Gang | Übersetzung | Gangsprung / % |
|---|---|---|
| 1 | 1,000 | |
| 2 | 0,790 | 26 |
| 3 | 0,630 | 25 |
| 4 | 0,500 | 26 |
| 5 | 0,398 | 26 |
| 6 | 0,317 | 26 |
| 7 | 0,250 | 27 |
| | | Spreizung : 400 % |

Figur 2 zeigt, dass zwei der vier Schaltfinger 61 jeweils über einen selbstschaltenden Überholfreilauf 59 mit dem zugehörigen Sonnenrad 55, 56 verbunden sind. Damit ist es möglich, nach einer Blockade des Schaltfingers 61 durch die Schaltkulisse 66 bei einem Gangwechsel ein Wegdrehen des Schaltfingers 61 von der Schaltkulisse 66 zu verhindern. Der Schaltfinger 61 kann mittels der Schaltkulisse 66 in der Blockadeposition gehalten und gleichzeitig das Sonnenrad 55, 56 für einen Gangwechsel wieder freigegeben werden. Dies geschieht, indem bei einem Gangwechsel das Sonnenrad 55, 56 eine Drehrichtungsumkehr erfährt und dabei gleichzeitig der Freilauf 59 den Schaltfinger 61 von dem zugehörigen Sonnenrad 55, 56 entkoppelt.

Im Zusammenhang mit dem Überholfreilauf 59 steht auch derjenige Freilauf, der ein Sonnenrad 55 mit dem Planetensteg 22 verbindet, aber nicht einen Schaltfinger 61 mit dem zugehörigen Sonnenrad 55, 56.

Durch das Verhindern des Wegdrehens der Schaltfinger von der Schaltkulisse wird bei erneuter Blockade des Schaltfingers respektive Sonnenrad ein Leerweg der Tretkurbeln 7, 8 ohne Leistungsübertragung durch die Umlaufzeit des Schaltfingers bis zur Position der Schaltkulisse vermieden. Damit ist sichergestellt, dass für keinen der Gangwechsel ein Leerweg der Tretkurbeln 7, 8 ohne Leistungsübertragung entsteht. Es findet bei jedem Gangwechsel eine Leistungsübertragung vom Fahrer auf das Kettenblatt 4 bzw. das Hinterrad 9-2 und damit zugkraftunterbrechungsfrei statt.

In den Figuren 2, 6 und 7A bis 7C ist in einer bevorzugten Ausführung eine Schaltkulisse 66 für die aktive Variation der Übersetzung bzw. Schalten der Gänge dargestellt.

Die Schaltkulisse 66 ist parallel zur Richtung der Kurbelwellenachse Y verschiebbar, nämlich in Doppelpfeilrichtung 95. Durch Verschieben der Schaltkulisse 66 können die Schaltfinger 61 und damit die Sonnenräder 55, 56 einzeln oder kombiniert in beiden Drehrichtungen durch die Klauen 68 der Schaltkulisse 66 blockiert werden.

Dabei ist die Schaltkulisse 66 so ausgelegt, dass die Gänge immer in ihrer Reihenfolge nacheinander in beide Richtungen, d.h. beim Hoch- und Runterschalten, ohne ein Überspringen von Gängen durchgeschaltet werden.

Die Position, Abstände und Dimensionierung der Klauen 68 sind so gewählt, dass gemäß der Schaltlogik bzw. gemäß dem Übersetzungsschema und der erforderlichen Schaltgeschwindigkeit die gerade an einer bestimmten Übersetzung beteiligten Schaltfinger 61 blockiert oder freigegeben werden können.

Die Kanten der Klauen sind abgerundet, um Kantenträger zu minimieren. Für eine Blockade von Schaltfingern 61 in beiden Drehrichtungen zur Vermeidung eines Leerwegs der Tretkurbeln 7, 8 ohne Leistungsübertragung sind die Klauen derart angeordnet, dass die betreffenden Schaltfinger 61 umfasst und somit in beide Drehrichtungen blockiert werden, wie dies in Figur 7 erläutert wird.

Auf Grund des Abstands der Schaltmechanik aus Schaltkulisse 66 und Schaltfinger 61 zur zentralen Achse Y der Tretkurbelwelle 15 bzw. der Sonnenräder 55, 56 und dadurch geringeren Umfangskräften kann auch bei hoher Drehmomentdichte durch ein hohes maximales Drehmoment des Fahrers und den kompakten Abmessungen eines Fahrradantriebs 80 verschleißfrei unter Maximallast die Übersetzung variiert bzw. geschaltet werden.

In einer beispielhaften Ausführung gemäß Figur 8 können die Schaltfinger 61 mit einer elastischen Struktur 65 versehen werden. Diese dient dazu, einen Schaltschlag bei Blockade des Schaltfingers 61 bzw. des Sonnenrads 55, 56 zu verringern. Der Schaltfinger 61 bzw. die elastische Struktur 65 ertragen dabei das maximal auftretende Bremsmoment an dem Sonnenrad 55, 56 ohne plastische Materialverformung.

Figur 9 zeigt in einer bevorzugten Ausführung eine Vorrichtung für ein automatisiertes Verschieben der Schaltkulisse 66 durch einen Elektromotor 90 mit Getriebe 91, 92 nach Art eines Stellantriebs 60. Das Getriebe besteht aus einem Planetengetriebe 91 für die Untersetzung der Motordrehzahl, einer Stirnradstufe 92 für den Übergang auf eine Zwischenwelle und einer Spindel 93, die auf der Zwischenwelle angebracht ist. Die Spindelmutter 94 ist formschlüssig mit der Schaltkulisse 66, welche axial verschiebbar auf dem Gehäuse 14 gleitgelagert ist, verbunden.

Des Weiteren wird die Drehposition des Schaltfingers 61 beim Umlaufen mittels eines Sensors erfasst, um damit den Zeitpunkt der Verschiebung der Schaltkulisse zu steuern. Hierdurch wird sichergestellt, dass sich die Schaltkulisse vollständig in der richtigen Blockadeposition für den gewählten Gang befindet, wenn der entsprechende Schaltfinger 61 die Position der Schaltkulisse 66 erreicht.

Für eine kompakte Auslegung des Planetenschaltgetriebes 50 wird das hohe Fahrerdrehmoment durch ein dem Planetenschaltgetriebe 50 vorgeschaltetes Planetengetriebe 41 als Hochtreiberstufe 40 mit Übersetzung ins Schnelle reduziert, wie dies aus den Figuren 2 und 6 ersichtlich ist.

Der Planetenträger 45 der Hochtreiberstufe 40 ist dabei das Antriebs- bzw. Eingangselement der Hochtreiberstufe 40 und direkt mit der Tretkurbelwelle 15 drehfest verbunden. Abtriebs- bzw. Ausgangselement der Hochtreiberstufe 40 ist das Sonnenrad 43, welches mit dem Planetensteg 22 des linksseitigen Stufenplanetengetriebes 51 mit Übersetzung ins Schnelle verbunden ist. Das Hohlrad 42 der Hochtreiberstufe ist fest mit dem Gehäuse 14 verbunden.

Die Figuren 2, 6 und 10 zeigen in einer bevorzugten Ausführung die Anbindung eines Motors 3 zur Unterstützung der Fahrerleistung an das Schaltgetriebe 50.

Die Anbindung des Motors 3 erfolgt über ein Reduziergetriebe 30 an den Planetensteg 22 des linksseitigen Stufenplanetengetriebes mit Übersetzung ins Schnelle. Dabei bildet der Planetensteg 22 einen Teil des Radkörpers des Abtriebszahnrads 35 des Motorreduziergetriebes 30 und ist damit in das Motorgetriebe 30 integriert. Hierdurch ergibt sich eine besonders kompakte Bauweise des Tretlagerantriebs 80.

An dem Planetensteg 22 erfolgt für die Gänge 2 bis 7 die Summation von Fahrer- und Motordrehmoment. Für den ersten Gang erfolgt die Summation von Fahrer- und Motordrehmoment an der Tretkurbelwelle 15.

Die Figuren 3 und 4 zeigen den unterschiedlichen Leistungsfluss 101, 102 von Fahrer- und Motorleistung im ersten Gang und im zweiten bis siebten Gang.

Das Motorreduziergetriebe 30 besteht aus einem zweistufigen Stirnradgetriebe, wobei die motornahe Getriebestufe als ein besonders kompaktes Evoloidgetriebe mit einem Ritzel 36 auf der Motorwelle 31 mit fünf Zähnen ausgeführt ist. Auf der Zwischenwelle des Motorgetriebes ist ein Freilauf 75 angeordnet. Der Freilauf 75 ist ein Überholfreilauf und dient der Entkopplung des Motors 3 in einem Fall, bei welchem der Fahrer den Motor "überholt", d.h. beispielsweise bei Ausfall des Motors oder bei Geschwindigkeiten über 25 km/h.

In Figur 5 ist eine alternative Anordnung des Motors 3 zum Planetensteg 22 des linksseitigen Stufenplanetengetriebes mit Übersetzung ins Schnelle mit zweistufigem Stirnradgetriebe als Reduziergetriebe 30 dargestellt. Durch die Anordnung des Motorreduziergetriebes 30 zwischen Hochtreiberstufe 40 und Planetenschaltgetriebe 50 nutzt das Motorreduziergetriebe 30 die Übersetzung der Hochtreiberstufe 40 mit und kann somit durch die um die Übersetzung der Hochtreiberstufe 40 reduzierte Untersetzung des Motorreduziergetriebes 30 kompakter ausgelegt werden.

Ein Schnittbild des Aufbaus des Pedelec/eBike-Tretlagerantriebs 80 mit Schaltgetriebe 50 und Motor 3 mit Motorreduziergetriebe 30 in einer bevorzugten Ausführung zeigt Figur 11.

Es zeigt insbesondere die Umsetzung der Erfindung mit Lagerung und Teilen der Gehäusestruktur. Eine besonders kompakte Darstellung des axialen Bauraums des Tretlagerantriebs 80 ergibt sich durch axial versetzte Wellenverbindungen von Planetensteg 45 und Sonnenrad 43 der Hochtreiberstufe 40.

Damit ist es möglich, unterhalb von Planetensteg 45 und Sonnenrad 43 der Hochtreiberstufe 40 die Lagerung der Tretkurbelwelle 15 anzubringen. Darüber hinaus ergibt sich eine besonders kompakte Darstellung des axialen Bauraums durch die gebogene Form der Schaltfinger 61 - siehe Figuren 2, 6 und 11 - und die Ausführung des Radkörpers des treibenden Zahnrads der zweiten Getriebestufe des Motorreduziergetriebes 30 als einseitig geschlossener Hohlzylinder, wie in den Figuren 10 und 11 dargestellt ist.

Bei einer besonders kompakten Weiterbildung der erfindungsgemäßen Antriebsanordnung 80 weist der elektrische Antrieb 3 einen Hohlwellenmotor mit einer ausgangsseitigen Hohlwelle auf.

Dabei kann der Hohlwellenmotor insgesamt oder zumindest mit seiner Hohlwelle koaxial zur Drehachse Y der Kurbelwelle 15, zum Planetengetriebe 21, zum eingangsseitigen Planetensteg 22 des Planetengetriebes 21 und/oder zum Sonnenrad 43 einer etwaig vorgesehenen Hochtreiberstufe 40 angeordnet und ausgebildet sein.

Das bedeutet konkret, dass bei den Ausführungsformen gemäß den Figuren 2 bis 5 der dort axial seitlich versetzt angeordnete elektrische Antrieb 3 ersetzt wird durch eine koaxiale Anordnung mit Hohlwellenmotor.

Dabei kann die Hohlwelle des Hohlwellenmotor des elektrischen Antriebs 3 mittelbar, zum Beispiel über ein Motorreduziergetriebe 30, oder unmittelbar mit dem eingangsseitigen Planetensteg 22 des Planetengetriebes 21 und/oder mit dem Sonnenrad 43 einer etwaig vorgesehenen Hochtreiberstufe 40 gekoppelt oder koppelbar sein, insbesondere in steuerbarer Weise.

Nachfolgend werden weiter bevorzugte Ausführungsformen der erfindungsgemäßen Antriebsanordnung 80 mit Hohlwellenmotor erläutert:
Die Erfindung hat ferner die Aufgabe, einen elektrischen Antrieb 3 und insbesondere einen diesbezüglichen Motor zur Unterstützung des Fahrers in besonders geeigneter Weise in ein lastschaltfähiges, zugkraftunterbrechungsfreies und effizientes Automatikschaltgetriebe einer Antriebseinheit 80 am Tretlager eines Pedelecs 1 zu integrieren.

Dieses Problem wird unter anderem durch den Einsatz und durch die Integration eines Hohlwellenmotors in ein lastschaltbares Planetengetriebe 21, 50 in koaxialer Anordnung zur Tretkurbelwelle 15 und Kettenblatt 4 gelöst.

Vorzugsweise sind dabei Hohlwellenmotor, Motorelektronik, Planetenschaltgetriebe 21, 50, Tretkurbelwelle 15 und Kettenblatt 4 koaxial angeordnet.

Das lastschaltbare Planetengetriebe 20 ist nach dem oben beschriebenen Prinzip aufgebaut und weist die entsprechenden Vorteile auf, wobei es die Aufgabe einer Fahrradschaltung bzw. einer variablen Übersetzung für die Antriebskraft des Fahrers übernimmt.

Wie oben bereits im Detail dargelegt wurde, erfolgen das Variieren der Übersetzung und/oder das Schalten durch Blockieren oder Freigeben der Sonnenräder 55, 56. Dazu sind an den Sonnenrädern 55, 56 des Planetengetriebes 21, 50 jeweils seitlich Schaltfinger 61 angebracht, die mit den Sonnenrädern 55, 56 drehfest verbunden sind und mit diesen umlaufen. Mittels einer Schaltkulisse 66, die achsparallel zur Tretkurbelwelle 15 angeordnet und axial in Richtung der Kurbelwellenachse Y beispielsweise mit einem Elektromotor verschiebbar ist, können die Schaltfinger 61 und damit die Sonnenräder 55, 56 einzeln oder kombiniert in beiden Drehrichtungen blockiert werden.

Der Rotor eines Hohlwellenmotors 3 ist entweder direkt oder bevorzugt über ein Motorreduziergetriebe 30 mit einem rotierenden Eingangselement 22 des Planetenschaltgetriebes 21, 50 verbunden. Der Stator ist zusammen mit der Elektronik am Gehäuse 14 angebunden. Vorzugsweise kann ein Hohlwellenmotor zwischen einer Hochtreiberstufe 40, welche zur Reduzierung des Fahrerdrehmoments dem Planetenschaltgetriebe 21, 50 vorgelagert ist, und dem Planetenschaltgetriebe 21, 50 angeordnet werden. Damit nutzt das Motorreduziergetriebe 30 die Übersetzung der Hochtreiberstufe 40 mit und kann entsprechend kompakter ausgelegt werden. Alternativ kann auch der Motor 3 kompakter ausgelegt werden.

In einer bevorzugten Weiterbildung der Erfindung übernimmt der Hohlwellenmotor 3 auch die Funktion des Stellantriebs 60 bzw. der Aktorik für die Schaltmechanik des Planetenschaltgetriebes 21, 50. Dies geschieht durch die Verbindung des Hohlwellenmotors 3 über ein zuschaltbares Getriebe und Spindeltrieb mit der Schaltmechanik, insbesondere mit einer Schaltkulisse 66.

Neben dem oben bereits beschriebenen Aufbau eines Pedelec/eBike-Tretlagerantriebs mit lastschaltbarem Planetenschaltgetriebe 21, 50 ist bei den weiteren Ausführungsformen für den Motorantrieb 3 ein Hohlwellenmotor ausgebildet.

Der Hohlwellenmotor ist koaxial zur Tretkurbelwelle 15 und zum Kettenblatt 4 zwischen den Schaltfingern 61 und dem Stufenplanetengetriebe 51, 52 des Planetenschaltgetriebes 21, 50 angeordnet.

Der Rotor des Hohlwellenmotors kann mit seiner Hohlwelle direkt mit dem Planetensteg 22 des Stufenplanetengetriebes 51, 52 des Planetenschaltgetriebes 21, 50 verbunden sein. Der Stator und die Motorelektronik des Hohlwellenmotors können mit dem Gehäuse 14 verbunden sein. Die Verbindungen der Schaltfinger 61 mit den zugehörigen Sonnenrädern 55, 56 können innerhalb der Hohlwelle des Hohlwellenmotors und durch die Hohlwelle hindurch verlaufen.

Für eine besonders kompakte Darstellung können auch der mit einem Schaltfinger verbundene Freilauf 59 und ein weiterer Freilauf, welcher den Planetensteg 22, 23 mit einem Sonnenrad 55, 56 verbinden kann, innerhalb der Hohlwelle des Hohlwellenmotors angeordnet sein.

Alternativ kann der Rotor eines Hohlwellenmotors über ein Planetengetriebe, insbesondere ein Stufenplanetengetriebe, als Motorreduziergetriebe an den Planetensteg 22 des Planetenschaltgetriebes 21, 50 angebunden sein. Ein Freilauf zwischen der Hohlwelle des Hohlwellenmotors und dem Sonnenrad des Motorreduziergetriebes kann den Motor vom Fahrerantriebsstrang bei Stillstand des Motors entkoppeln, um einen für den Fahrer ungünstigen Wirkungsgrad durch Schleppbetrieb des Motors zu vermeiden.

Bei einer bevorzugten Ausführung kann das Planetengetriebe des Motors bei gleichem Achsabstand die Wellen der Planeten 57, 58 des Planetenschaltgetriebes 21, 50 mitnutzen.

Bei einem weiteren Ausführungsbeispiel ist dies Anordnung eines Hohlwellenmotors mit Motorreduziergetriebe zwischen Hochtreiberstufe und einem äußerem der Schaltfinger 61 ausgebildet.

Ein Motorfreilauf zur Entkopplung des Motors bei Motorstillstand kann zwischen dem Planetensteg als Abtriebselement des Motorreduziergetriebes und dem Planetensteg 22, 23 als Antriebselement des Planetenschaltgetriebes 21, 50 angeordnet sein.

Eine alternative Anbindung eines Hohlwellenmotors kann über ein zweistufiges Stirnradgetriebe als Motorreduziergetriebe an den Planetensteg 22 des Planetenschaltgetriebes 21, 50 erfolgen.

Darüber hinaus kann die Verbindung des Hohlwellenmotors über ein zuschaltbares Getriebe und Spindeltrieb mit einer Schaltkulisse 66 erfolgen. Der Hohlwellenmotor übernimmt dabei zusätzlich die Funktion eines Stellantriebs 60 für die automatische Schaltmechanik des Planetenschaltgetriebes 21, 50, insbesondere für die automatische Verstellung der Schaltkulisse 66.

Denkbar ist auch ein Hohlwellenmotors mit einer direkten Anbindung an den Planetensteg 22 des Planetenschaltgetriebes 21, 50, d.h. ohne Motorreduziergetriebe.

## Patentansprüche

1. Antriebsanordnung (80) für ein mit Muskelkraft und/oder - zusätzlich - mit Motorkraft antreibbares Fahrzeug (1), ein Elektrofahrrad, e-Bike, Pedelec oder dergleichen,
mit:
- einer um eine Drehachse (Y) drehbaren Kurbelwelle (15) zum Aufnehmen eines ersten und insbesondere mit Muskelkraft erzeugten Drehmomentes und
- einer Übertragungseinrichtung (20), welche zum Übertragen des ersten Drehmomentes von der Kurbelwelle (15) an ein mit einem Antriebsrad (9-2) des Fahrzeuges (1) koppelbares Abtriebselement (4) und mittels eines - insbesondere automatisch - schaltbaren mehrstufigen Planetengetriebes (21) zu einer variablen Übersetzung ausgebildet ist,
bei welchem:
- die Übersetzung des Planetengetriebes (21) über einen Gangwechsel und durch gesteuertes Verbinden und/oder Freigeben jeweiliger Sonnenräder (55, 56) entsprechender Planetenstufen (57, 58) über ein mit dem jeweiligen Sonnenrad (55, 56) drehfest gekoppeltes Mitnehmerelement (64) einstellbar ist und
- das jeweilige Mitnehmerelement (64) radial und/oder axial außerhalb des jeweils gekoppelten Sonnenrades (55, 56) angeordnet ist,
**dadurch gekennzeichnet, dass** ein Gangwechsel über einen Stellantrieb (60) durchführbar ist, mittels einer in Bezug auf die Drehachse (Y) der Kurbelwelle (15) und/oder der Sonnenräder (55, 56) radial beabstandeten und gesteuert achsenparallel positionierbaren Schaltkulisse (66) mit einer Mehrzahl von Anschlagselementen (68) für die Mitnehmerelemente (64).

2. Antriebsanordnung (80) nach Anspruch 1,
bei welcher das Mitnehmerelement (64) jeweils an einem oder als ein radial außen liegender oder äußerster Abschnitt eines mit dem jeweiligen Sonnenrad (55, 56) drehfest gekoppelten Schaltfingers (61) ausgebildet ist.

3. Antriebsanordnung (80) nach Anspruch 2,
bei welcher der jeweilige Schaltfinger (61) ausgebildet ist mit einer - insbesondere ringförmigen - Basis (62) zur drehfesten Kopplung mit dem jeweiligen Sonnenrad (55, 56) und einem sich von der Basis (62) im Wesentlichen radial nach außen erstreckenden Radialabschnitt (63), dessen von der Basis (62) abgewandtes distales Ende (63-2) das jeweilige Mitnehmerelement (64) ausweist oder bildet, insbesondere in Form einer Klaue.

4. Antriebsanordnung (80) nach Anspruch 3,
bei welcher ein Radialabschnitt (63) eines jeweiligen Schaltfingers (61) einen elastischen Abschnitt (65) aufweist oder bildet, welcher in Bezug auf die Drehachse (Y) des jeweils zu Grunde liegenden Sonnenrades (55, 56) tangential oder in Umfangsrichtung elastisch deformierbar ist, um bei einem Anschlag oder einer Freigabe des jeweiligen Mitnehmerelements (64) eine ruckarme oder -freie Bewegung des zu Grunde liegenden Sonnenrades (55, 56) zu bewirken.

5. Antriebsanordnung (80) nach einem der vorangehenden Ansprüche,
bei welcher mehrere Mitnehmerelemente (64) über einen mechanisch selbstschaltenden Freilauf (59) mit einem jeweiligen Sonnenrad (55, 56) verbunden ist, insbesondere im Zusammenhang mit einem Drehrichtungswechsel der zugehörigen Sonnenräder (55, 56) bei einem Gangwechsel und/oder mit einem Festhalten der jeweiligen Mitnehmerelemente (64) in beiden Drehrichtungen, insbesondere durch einen Stellantrieb (60), z.B. in Form einer Schaltkulisse (66).

6. Antriebsanordnung (80) nach einem der vorangehenden Ansprüche, bei welcher:
- das schaltbare mehrstufige Planetengetriebe (21) im Wesentlichen koaxial zur Drehachse (Y) der Kurbelwelle (15) ausgebildet ist und/oder
- das Abtriebselement (4) rotationssymmetrisch und koaxial zur Drehachse (Y) der Kurbelwelle (15) und zum Planetengetriebe (21) ausgebildet ist und insbesondere ein Ketten- oder Zahnriemenblatt ist oder aufweist.

7. Antriebsanordnung (80) nach einem der vorangehenden Ansprüche,
bei welcher eine erweiterte Anzahl an Gängen und/oder an schaltbaren Übersetzungen ausgebildet ist durch den Einsatz von einem oder von mehreren Freiläufen (59, 59-1), insbesondere für die Realisierung einer Übersetzung von 1:1, in einem Stufenplanetengetriebe (51) mit einer Übersetzung ins Schnelle, in der Gesamtübersetzung durch einen Direktgang und/oder in aktiv schaltbarer oder mechanisch selbstschaltender Art und Weise.

8. Antriebsanordnung (80) nach einem der vorangehenden Ansprüche,
bei welcher
- Getriebeschaltstufen (50) des Planetengetriebes (21) gebildet werden von (i) einem ersten und insbesondere zweistufigen Planetengetriebe (51) mit Gesamtübersetzung ins Schnelle und (ii) einem dazu in Reihe geschalteten zweiten und insbesondere zweistufigen Planetengetriebe (52) mit Gesamtübersetzung ins Langsame, vorzugsweise in Form eines Stufenplanetengetriebes, und
- insbesondere (iii) den Getriebeschaltstufen (50) eine Hochtreiberstufe (40) mit einem oder in Form eines Planetengetriebes (41) mit Übersetzung ins Schnelle zur Reduktion eines hohen Fahrerdrehmomentes eingangsseitig vorgeschaltet ist und/oder (iv) die beiden in Reihe geschalteten Planetengetriebe (51, 52) der Getriebeschaltstufen (50) über ein gemeinsames Hohlrad (53) miteinander gekoppelt sind.

9. Mit Muskelkraft und/oder - zusätzlich - mit Motorkraft antreibbares Fahrzeug (1), Elektrofahrrad, eBike, Pedelec oder dergleichen,
mit:
- mindestens einem Rad (9-1, 9-2) und
- einer Antriebsanordnung (80) nach einem der Ansprüche 1 bis 8 zum Antreiben des mindestens einen Rades (9-1, 9-2).

## Claims

1. Drive arrangement (80) for a vehicle (1) that can be driven by muscle power and/or - additionally - by motor power, an electric bicycle, e-bike, pedelec or the like,
comprising:
- a crankshaft (15), which is able to rotate about an axis of rotation (Y), for receiving a first torque, produced in particular by muscle power, and
- a transmission device (20), which is configured for transmitting the first torque from the crankshaft (15) to an output element (4) that can be coupled to a drive wheel (9-2) of the vehicle (1) and, by means of an - in particular automatically - shiftable multi-stage planetary gearing (21), for realizing a variable transmission ratio,
in which drive arrangement:
- the transmission ratio of the planetary gearing (21) can be adjusted by way of a gear ratio change and by controlled connection and/or release of respective sun gears (55, 56) of corresponding planetary stages (57, 58) by way of a driver element (64), which is coupled in a rotationally-fixed manner to the respective sun gear (55, 56), and
- the respective driver element (64) is arranged radially and/or axially outside the respectively coupled sun gear (55, 56),
**characterized in that** a gear ratio change can be performed by way of an actuating drive (60), by means of a shift motion link (66), which is radially spaced apart from, and can be positioned in a controlled manner axially parallel with respect to, the axis of rotation (Y) of the crankshaft (15) and/or of the sun gears (55, 56), said shift motion link having a multiplicity of stop elements (68) for the driver elements (64).

2. Drive arrangement (80) according to Claim 1, in which the driver element (64) is in each case configured on, or is configured as a radially outer or outermost portion of, a shift finger (61) that is coupled in a rotationally-fixed manner to the respective sun gear (55, 56).

3. Drive arrangement (80) according to Claim 2, in which the respective shift finger (61) is configured with an - in particular ring-shaped - base (62) for rotationally-fixed coupling to the respective sun gear (55, 56), and with a radial portion (63) that extends from the base (62) substantially radially towards the outside and of which the distal end (63-2) facing away from the base (62) has or forms the respective driver element (64), in particular in the form of a pawl.

4. Drive arrangement (80) according to Claim 3, in which a radial portion (63) of a respective shift finger (61) has or forms an elastic portion (65), which can be elastically deformed tangentially or in the circumferential direction in relation to the axis of rotation (Y) of the respectively underlying sun gear (55, 56) in order to bring about a movement with minimal jerk or a jerk-free movement of the underlying sun gear (55, 56) when the respective driver element (64) is stopped or released.

5. Drive arrangement (80) according to one of the preceding claims,
in which a plurality of driver elements (64) are connected to a respective sun gear (55, 56) by way of a mechanically self-shifting freewheel (59), in particular in conjunction with a change in direction of rotation of the associated sun gears (55, 56) during a gear ratio change and/or with immobilization of the respective driver elements (64) in both directions of rotation, in particular by means of an actuating drive (60), for example in the form of a shift motion link (66).

6. Drive arrangement (80) according to one of the preceding claims,
in which:
- the shiftable multi-stage planetary gearing (21) is configured to be substantially coaxial with respect to the axis of rotation (Y) of the crankshaft (15) and/or
- the output element (4) is configured to be rotationally symmetrical and coaxial with respect to the axis of rotation (Y) of the crankshaft (15) and with respect to the planetary gearing (21), and in particular is or has a chain ring or toothed-belt ring.

7. Drive arrangement (80) according to one of the preceding claims,
in which an expanded number of gear ratios and/or of shiftable transmission ratios is configured by the use of one or a plurality of freewheels (59, 59-1), in particular for realizing a 1:1 transmission ratio, in a staged planetary gearing (51) with a speed-increasing transmission ratio, in the overall transmission ratio by means of a direct gear ratio and/or in an actively shiftable or mechanically self-shifting manner.

8. Drive arrangement (80) according to one of the preceding claims,
in which
- gearing shift stages (50) of the planetary gearing (21) are formed by (i) a first, in particular two-stage, planetary gearing (51) with an overall speed-increasing transmission ratio and (ii) a second, in particular two-stage, planetary gearing (52) with an overall speed-decreasing transmission ratio, which is connected in series to the first planetary gearing and is preferably in the form of a staged planetary gearing, and
- in particular (iii) a step-up stage (40) with, or in the form of, a planetary gearing (41) with a speed-increasing transmission ratio for reducing high rider torque is connected upstream at the input side of the gearing shift stages (50), and/or (iv) the two series-connected planetary gearings (51, 52) of the gearing shift stages (50) are coupled to one another by way of a common ring gear (53).

9. Vehicle (1) that can be driven by muscle power and/or - additionally - by motor power, an electric bicycle, e-bike, pedelec or the like,
comprising:
- at least one wheel (9-1, 9-2) and
- a drive arrangement (80) according to one of Claims 1 to 8 for driving the at least one wheel (9-1, 9-2).

## Revendications

1. Système d'entraînement (80) pour un véhicule (1) pouvant être entraîné par une force musculaire et/ou en plus par une force de moteur, un vélo électrique, un eBike, un Pedelec ou similaire,
comprenant :
- un vilebrequin (15) pouvant tourner autour d'un axe de rotation (Y) pour recevoir un premier couple généré notamment avec une force musculaire et
- un dispositif de transmission (20) qui est réalisé de manière à transmettre le premier couple depuis le vilebrequin (15) à un élément de prise de force (4) pouvant être accouplé à une roue d'entraînement (9-2) du véhicule (1) et au moyen d'un engrenage planétaire (21) à plusieurs étages, commutable, notamment automatiquement, en vue d'une transmission variable, dans lequel :
- la transmission de l'engrenage planétaire (21) peut être ajustée par le biais d'un changement de vitesses et par une connexion et/ou une libération commandées de roues solaires respectives (55, 56) d'étages planétaires correspondants (57, 58) par le biais d'un élément d'entraînement (64) accouplé de manière solidaire en rotation à la roue solaire respective (55, 56), et
- l'élément d'entraînement respectif (64) est disposé radialement et/ou axialement à l'extérieur de la roue solaire respectivement accouplée (55, 56),
**caractérisé en ce qu'**un changement de vitesses peut être effectué par le biais d'un entraînement de commande (60), au moyen d'une coulisse de changement de vitesses (66) espacée radialement par rapport à l'axe de rotation (Y) du vilebrequin (15) et/ou des roues solaires (55, 56) et pouvant être positionnée de manière commandée avec son axe parallèle, ayant une pluralité d'éléments de butée (68) pour les éléments d'entraînement (64).

2. Système d'entraînement (80) selon la revendication 1,
dans lequel l'élément d'entraînement (64) est réalisé respectivement au niveau d'une, ou sous forme d'une, portion située radialement à l'extérieur ou la plus extérieure d'un doigt de changement de vitesses (61) accouplé de manière solidaire en rotation à la roue solaire respective (55, 56).

3. Système d'entraînement (80) selon la revendication 2,
dans lequel le doigt de changement de vitesses respectif (61) est réalisé avec une base (62), notamment de forme annulaire, pour l'accouplement solidaire en rotation à la roue solaire respective (55, 56) et avec une portion radiale (63) s'étendant essentiellement radialement vers l'extérieur depuis la base (62), dont l'extrémité distale (63-2) opposée à la base (62) présente ou forme l'élément d'entraînement respectif (64), notamment sous la forme d'une griffe.

4. Système d'entraînement (80) selon la revendication 3,
dans lequel une portion radiale (63) d'un doigt de changement de vitesses respectif (61) présente ou forme une portion élastique (65) qui peut être déformée tangentiellement ou élastiquement dans la direction périphérique par rapport à l'axe de rotation (Y) de la roue solaire (55, 56) sous-jacente respectivement, afin de provoquer un mouvement sans à-coups ou à faibles à-coups de la roue solaire (55, 56) sous-jacente dans le cas d'une venue en butée ou d'une libération de l'élément d'entraînement respectif (64).

5. Système d'entraînement (80) selon l'une quelconque des revendications précédentes,
dans lequel plusieurs éléments d'entraînement (64) sont reliés à une roue solaire (55, 56) respective par le biais d'une roue libre (59) à commutation automatique mécaniquement, en particulier en rapport avec un changement de sens de rotation des roues solaires (55, 56) associées en cas de changement de vitesses et/ou avec une fixation des éléments d'entraînement (64) respectifs dans les deux sens de rotation, en particulier au moyen d'un entraînement de commande (60), par exemple sous la forme d'une coulisse de changement de vitesses (66).

6. Système d'entraînement (80) selon l'une quelconque des revendications précédentes,
dans lequel:
- l'engrenage planétaire commutable (21), à plusieurs étages, est réalisé essentiellement coaxialement par rapport à l'axe de rotation (Y) du vilebrequin (15) et/ou
- l'élément de prise de force (4) est réalisé avec une symétrie de révolution et coaxialement par rapport à l'axe de rotation (Y) du vilebrequin (15) et par rapport à l'engrenage planétaire (21) et notamment est ou présente un plateau de chaîne ou un plateau de courroie dentée.

7. Système d'entraînement (80) selon l'une quelconque des revendications précédentes,
dans lequel un nombre accru de vitesses et/ou de rapports de transmission commutables est formé par l'utilisation d'une ou de plusieurs roues libres (59, 59-1), en particulier pour la réalisation d'un rapport de transmission de 1:1, dans un engrenage planétaire étagé (51) à multiplication, dans le rapport de transmission total par une prise directe et/ou de manière commutable activement ou à commutation automatique mécaniquement.

8. Système d'entraînement (80) selon l'une quelconque des revendications précédentes,
dans lequel
- des étages de commutation d'engrenage (50) de l'engrenage planétaire (21) sont formés par (i) un premier engrenage planétaire (51) en particulier à deux étages à rapport de transmission total de multiplication et (ii) un deuxième engrenage planétaire (52) en particulier à deux étages monté en série avec celui-ci et à rapport de transmission total de démultiplication, de préférence sous la forme d'un engrenage planétaire étagé, et
- notamment (iii) un étage multiplicateur (40) doté ou sous la forme d'un engrenage planétaire (41) à multiplication pour la réduction d'un couple de conducteur élevé côté entrée est monté en amont des étages de commutation d'engrenage (50) et/ou (iv) les deux engrenages planétaires (51, 52) montés en série des étages de commutation d'engrenage (50) sont accouplés l'un à l'autre par le biais d'une couronne commune (53).

9. Véhicule (1) pouvant être entraîné par une force musculaire et/ou en plus par une force de moteur, vélo électrique, eBike, Pedelec ou similaire, comprenant :
- au moins une roue (9-1, 9-2) et
- un système d'entraînement (80) selon l'une quelconque des revendications 1 à 8 pour l'entraînement de l'au moins une roue (9-1, 9-2).
